# EUROPEAN PATENT APPLICATION

(11) **EP 4 351 270 A1**
(43) Date of publication of application: **10.04.2024**
(21) Application number: 21942338.1
(22) Date of filing: 27.05.2021
(51) Int. Cl.: H04W 88/04

(54) **RELAY DETERMINATION METHOD AND APPARATUS, REMOTE DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); LI, Haitao, Dongguan, Guangdong 523860 (CN); LENG, Bingxue, Dongguan, Guangdong 523860 (CN); CHEN, Jingran, Dongguan, Guangdong 523860 (CN)
(74) Representative: Taor, Simon Edward William
(86) International application number: PCT/CN2021/096512
(87) International publication number: WO 2022/246762

(57) **Abstract**

The present application belongs to the field of communications. Disclosed are a relay determination method and apparatus, a remote device and a storage medium. The method comprises: performing relay selection or relay reselection according to a network access mode of a candidate relay device, wherein the network access mode comprises NTN access or terrestrial access. For different network access modes, delays between a candidate relay device and a data network are different, and a remote device learns the network access mode of the candidate relay device, and can select a candidate relay device having a relatively small transmission delay by using the network access mode as a basis for relay selection or relay reselection, so as to access a better cell, thereby improving the communication service quality of the cell accessed by the remote device.

## Description

### TECHNICAL FIELD

Embodiments of the present disclosure relate to the communication field, and more specifically, to a relay determination method and apparatus, a remote device and a storage medium.

### BACKGROUND

Currently, the third Generation Partnership Project (3GPP) is researching Non-Terrestrial Network (NTN) technology. In the NTN system, satellite communication is used to provide communication services to User Equipment (UE).

Some remote devices may select a relay device through relay selection, so as to access a network through the relay device. If the access performance of the currently connected relay device is not good, the remote device may select another relay device to access the network through relay reselection.

In the related art, the remote device performs relay selection or relay reselection based on a Reference Signal Received Power (RSRP). In a satellite network, especially in Geostationary Earth Orbit (GEO) satellite network, the distance between a UE and the satellite and the distance between the satellite and the ground station are too large, resulting in a relatively large delay in the communication between the UE and the data network. Thus, some delay-sensitive services are not suitable for use in the NTN network. Therefore, when a relay device establishes a connection with the ground base station through the satellite, if it is not the optimal choice for the remote device to access the relay device, this may cause a large data service delay of the remote device and provide poor communication service quality.

### SUMMARY

Embodiments of the present disclosure provide a relay determination method and apparatus, a remote device, and a storage medium. The technical solutions are as follows:

According to an aspect of embodiments of the present disclosure, a relay determination method is provided, the method including:
performing relay selection or relay reselection according to a network access mode of at least one candidate relay device;
wherein the network access mode includes NTN access or terrestrial access.

According to another aspect of embodiments of the present disclosure, a relay determination apparatus is provided, the apparatus including:
a processing module, configured to perform relay selection or relay reselection according to a network access mode of at least one candidate relay device;
wherein the network access mode includes NTN access or terrestrial access.

According to another aspect of embodiments of the present disclosure, a remote device is provided, and the remote device including:
one or more processors;
one or more transceivers coupled to the one or more processors;
wherein the one or more processors are configured to load and execute executable instructions to implement the above relay determination method.

According to another aspect of embodiments of the present disclosure, a computer-readable storage medium is provided. At least one instruction is stored in the storage medium, and the at least one instruction is loaded and executed by one or more processors to implement the above relay determination method.

According to another aspect of embodiments of the present disclosure, a computer program product or computer program is provided. The computer program product or the computer program includes one or more instructions, and the one or more instructions are stored in a computer-readable storage medium. One or more processors of the remote device read the one or more instructions from the computer-readable storage medium, and the one or more processors execute the one or more instructions to cause the remote device to implement the above relay determination method.

In the embodiments of the present disclosure, due to different network access modes, delays between candidate relay devices and a data network are different. By learning the network access mode of at least one candidate relay device, the remote device uses this as the basis for relay selection or relay reselection, and a candidate relay device with a relatively small transmission delay can be selected and the remote device can access a better cell. The technical solution improves the communication service quality of a cell accessed by the remote device, and avoids a situation where the remote device selects a candidate relay device which is connected to a ground base station through a satellite in a case where the remote device does not know the network access mode of the candidate relay device, and thus the communication service quality of the accessed cell is relatively poor and some service requirements of the remote device cannot be met.

It is to be understood that both the foregoing general description and the following detailed description are exemplary and explanatory only and are not restrictive of the present disclosure.

### BRIEF DESCRIPTION OF THE DRAWINGS

In order to more clearly illustrate the technical solutions in the embodiments of the present disclosure, the drawings that need to be used in the description of the embodiments will be briefly introduced below. Obviously, the drawings in the following description are only some embodiments of the present disclosure. For those skilled in the art, other drawings can also be obtained based on these drawings without creative effort.
FIG. 1 is a schematic diagram of a satellite network architecture for transparent forwarding according to an exemplary embodiment of the present disclosure;
FIG. 2 is a schematic diagram of a satellite network architecture for regenerative forwarding according to an exemplary embodiment of the present disclosure;
FIG. 3 is a schematic diagram of a satellite network architecture for transparent forwarding in a 5th Generation Mobile Communication Technology (5G) scenario according to an exemplary embodiment of the present disclosure;
FIG. 4 is a schematic diagram of a satellite network architecture for regenerative forwarding in a 5G scenario according to an exemplary embodiment of the present disclosure;
FIG. 5 is a flowchart of establishing a connection between a remote UE and a relay UE according to an exemplary embodiment of the present disclosure;
FIG. 6 is a schematic diagram of a satellite network architecture for transparent forwarding according to another exemplary embodiment of the present disclosure;
FIG. 7 is a schematic diagram of a satellite network architecture for regenerative forwarding according to another exemplary embodiment of the present disclosure;
FIG. 8 is a schematic diagram of a satellite network architecture for transparent forwarding in a 5G scenario according to another exemplary embodiment of the present disclosure;
FIG. 9 is a schematic diagram of a satellite network architecture for regenerative forwarding in a 5G scenario according to another exemplary embodiment of the present disclosure;
FIG. 10 is a schematic diagram of a UE-to-Network Relay (sidelink relay) coverage scenario shown according to an exemplary embodiment of the present disclosure;
FIG. 11 is a flowchart of a relay determination method according to an exemplary embodiment of the present disclosure;
FIG. 12 is a schematic diagram of a protocol stack of a discovery message according to an exemplary embodiment of the present disclosure;
FIG. 13 is a flowchart showing a process of determining a network access mode of a candidate relay device according to an exemplary embodiment of the present disclosure;
FIG. 14 is a flowchart of a relay selection method according to an exemplary embodiment of the present disclosure;
FIG. 15 is a flowchart of a relay selection method according to another exemplary embodiment of the present disclosure;
FIG. 16 is a flowchart of a relay reselection method according to an exemplary embodiment of the present disclosure;
FIG. 17 is a block diagram of a relay determination apparatus according to an exemplary embodiment of the present disclosure;
FIG. 18 is a schematic structural diagram of a remote device according to an exemplary embodiment of the present disclosure.

### DETAILED DESCRIPTION

Descriptions will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the present disclosure. Rather, they are merely examples of apparatuses and methods consistent with aspects of the present disclosure as recited in the appended claims.

Currently, 3GPP is studying NTN technology. In the NTN system, satellite communication is generally used to provide communication services to ground UEs. Compared with terrestrial cellular network communication, satellite communication has many unique advantages. First of all, satellite communication is not limited by users' region; for example, general terrestrial communication cannot cover areas where communication equipment cannot be set up, such as oceans, mountains, and deserts, or areas where communication coverage is not possible due to sparse population. For satellite communication, since a satellite can cover a large area, and the satellite can orbit the earth, theoretically every corner of the earth can be covered by satellite communication. Secondly, satellite communication has great social value. Satellite communication can cover remote mountainous areas, poor and backward countries or regions at a lower cost, so that people in these regions can enjoy advanced voice communication and mobile Internet technologies, which is conducive to narrowing the digital gap with developed regions, and to promote the developments of these areas. Thirdly, the satellite communication distance is long, and the communication cost does not increase significantly when the communication distance increases. Finally, satellite communication has high stability and is not limited by natural disasters.

Communication satellites are divided into Low-Earth Orbit (LEO) satellites, Medium-Earth Orbit (MEO) satellites, GEO satellites, High Elliptical Orbit (HEO) satellites, etc. according to orbital altitudes. At present, LEO and GEO are mainly studied.

### LEO:

The altitude range of low-orbit satellites is 500 kilometers (km) to 1500 km, and the corresponding orbital period is about 1.5 hours to 2 hours. The signal propagation delay of single-hop communication between UEs is generally less than 20 milliseconds (ms). The maximum satellite visible time is 20 minutes. The signal propagation distance is short, the link loss is small, and the requirements for the transmit power of UE are not high.

### GEO:

Satellites in geosynchronous orbit have an orbital altitude of 35786 km and a rotation period around the earth of 24 hours. The signal propagation delay of single-hop communication between UEs is generally 250 ms.

In order to ensure the coverage of communication satellites and improve the system capacity of the entire satellite communication system, communication satellites use multi-beams to cover the ground. A communication satellite can form dozens or even hundreds of beams to cover the ground; a satellite beam can cover a ground area with a diameter of tens to hundreds of kilometers.

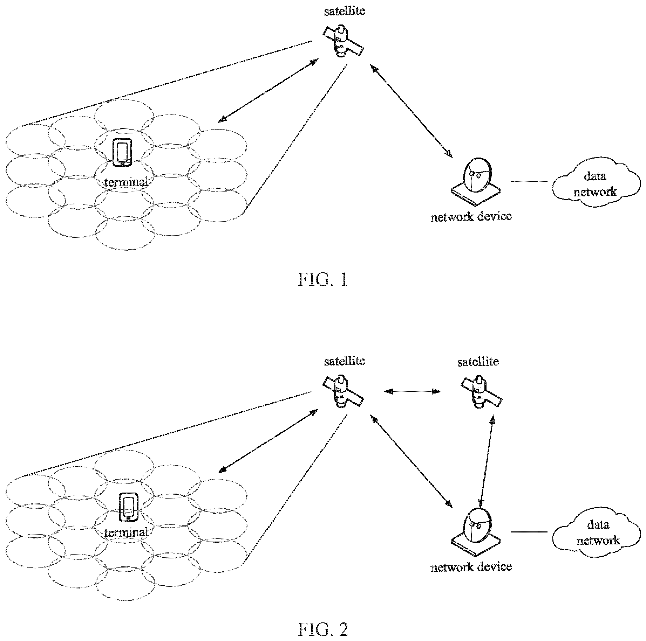

At present, there are two kinds of satellites considered by 3GPP, one is a s transparent forwarding (transparent payload) satellite, and the other is a regenerative forwarding (regenerative payload) satellite. The transparent forwarding satellite network architecture can be shown in FIG. 1. The regenerative forwarding satellite network architecture can be shown in FIG. 2.

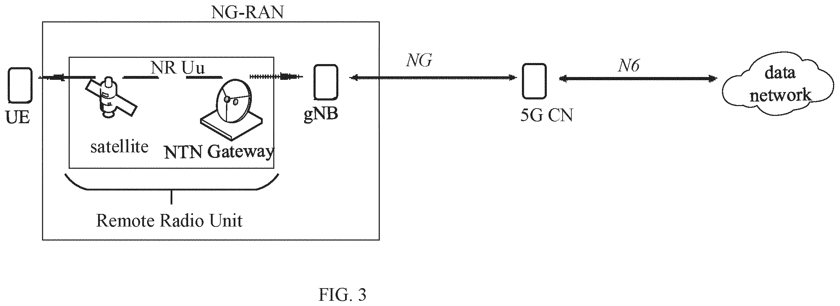

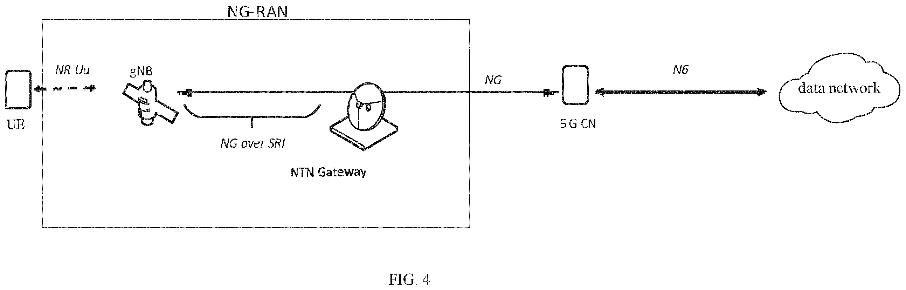

As shown in FIG. 1 and FIG. 2, the satellite network architecture may include network elements such as a satellite and a network device. The network device is used to connect the satellite and a data network on the ground. There may be one or more network devices. In view of the function of the network device in the satellite network, the network device may be called an NTN gateway device. For example, in a specific example, in a 5G scenario, a UE can be connected to 5G Core Network (SGCN) via NG-Radio Access Network (SG Radio Access Network, NG-RAN) which is based on NTN for transparent forwarding or regenerative forwarding. The satellite network architecture of the 5G scenario can be shown in FIG. 3 and FIG. 4. FIG. 3 shows the transparent forwarding satellite network architecture in the 5G scenario, and FIG. 4 shows the regenerative forwarding satellite network architecture in the 5G scenario.

Satellites can be divided into two types: transparent payload and regenerative payload in terms of the functions the satellites provide. The transparent payload only provides functions of wireless frequency filtering, frequency conversion and amplification. The transparent payload only provides transparent forwarding of signals and will not change the waveform of the signals forwarded by the transparent payload. In addition to providing the functions of wireless frequency filtering, frequency conversion and amplification, the regenerative payload can also provide functions of demodulation/decoding, routing/conversion, and encoding/modulation. The regenerative payload has a part or all of functions of a base station. The satellite network architecture also includes UE, which can establish a connection with the satellite and access the data network through the satellite. The UE can realize data interaction with the data network through the data forwarding function of the satellite. A communication link between the network device and the satellite is a feeder link, and a communication link between the UE and the satellite is a service link.

### Sidelink relay technology (Rel-13/15 UE-to-network Relay)

A remote device can refer to a device outside the network coverage, or it can refer to a device in an edge area of the network coverage. The remote device may not be connected to a base station, or the signal quality of a communication link after connecting to the base station may be poor. The remote device may also be referred to as a remote UE or a remote terminal. In the following description, the remote device is referred to as remote UE.

A relay device is an instrument device that is added in the middle when interconnection is performed in a homogeneous network segment with the same interface and the same medium access control protocol. The relay device can amplify a transmitted signal and retransmit it. The relay device has a relay function, and the relay means that a base station and a UE do not directly send signals to each other, but the signals experience signal amplification or regeneration processing at the relay device and are forwarded by the relay device. A relay device may also be referred to as a relay UE or a relay terminal. In the following description, the relay device is referred to as relay UE.

In Rel-13 ProSe (Proximity-Based Services, local services), 3GPP introduced the UE-to-network (device-to-network) relay function based on Layer 3 relay, that is, a remote UE accesses a network via a relay UE, and the relay UE assumes the function of IP layer relay, and transmits data between the remote UE and the network, and the remote UE and the relay UE are connected through a sidelink.

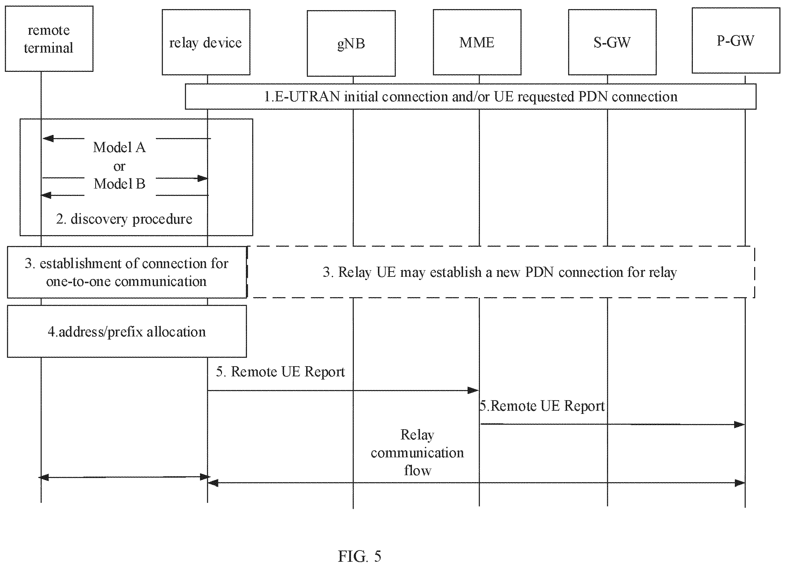

The specific connection establishment steps are shown in FIG. 5. Step 1 is Evolved Universal Mobile Telecommunications System Terrestrial Radio Access Network (E-UTRAN) initial connection and/or UE requested Public Data Network (PDN) connection (E-UTRAN initial attach and/or UE requested pdn connectivity).

Step 2 is a discovery procedure. In step 2, the discovery procedure can use either model A or model B.

Step 3 is establishment of connection for one-to-one communication. The relay UE may establish a new PDN connection for relay.

Step 4 is address/prefix allocation.

In step 5 and step 6, the remote performs Remote UE Report. The relay UE reports to the network the ID (Identification) and Internet Protocol (IP) information of the remote UE, and according to the reported information, the network learns the association relationship between the relay UE and the remote UE, so as to perform corresponding bearer/session management and configuration. In this way, the remote UE is connected to the network through the relay UE, and a relayed traffic is completed.

In Rel-15 FeD2D (Future Enhancements to Long Term Evolution Device to Device), 3GPP studies a UE-to-network relay function based on layer 2 relay. That is, a remote UE accesses a network via a relay UE, and the relay UE undertakes the adaptation layer relay functions (functions above the Radio Link Control (RLC) layer, and below the Packet Data Convergence Protocol (PDCP) layer), transfers data between the remote UE and the network, and the remote UE and the relay UE are connected through the sidelink.

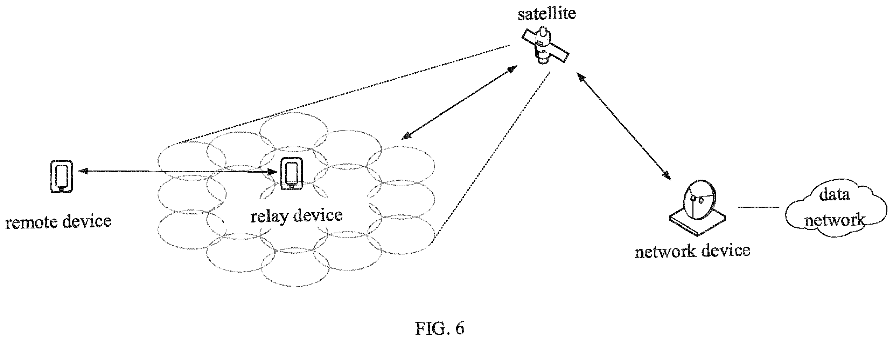

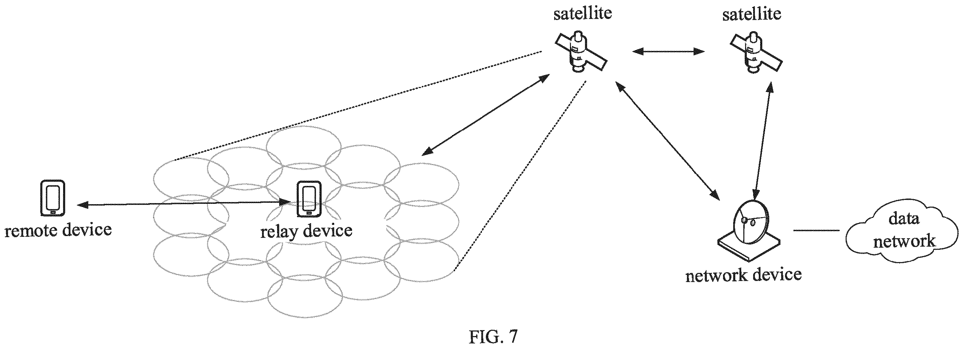

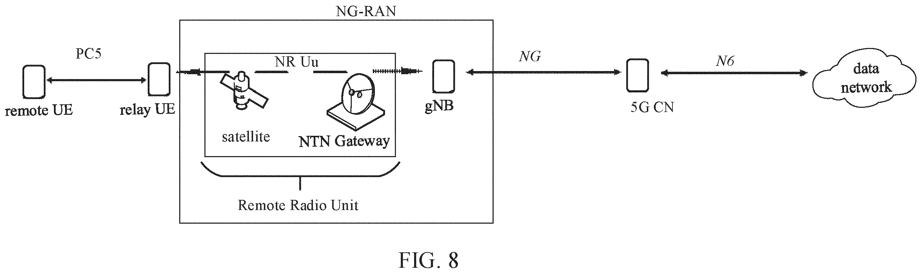

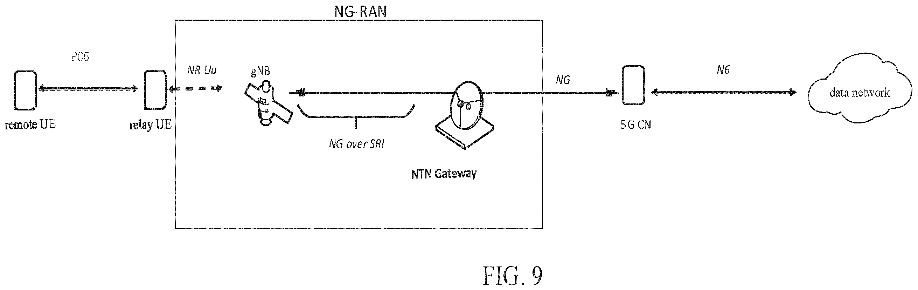

In a case where the sidelink relay technology is applied to the NTN scenario, the transparent forwarding satellite network architecture can be shown in FIG. 6. The regenerative forwarding satellite network architecture can be shown in FIG.7. As shown in FIG. 6 and FIG. 7, a relay UE is connected to a satellite, the satellite is connected to a network device on the ground, and the network device is connected to a data network, so that the relay UE accesses the data network through the NTN. The remote UE establishes a connection with the relay UE, and can access the data network through the relay UE. For example, in a specific example, in a 5G scenario, the UE can be connected to the 5GCN via the NG-RAN which is based on NTN for transparent forwarding or regenerative forwarding. The satellite network architecture of the 5G scenario can be shown in FIG. 8 and FIG. 9, FIG. 8 shows the transparent forwarding satellite network architecture in the 5G scenario, and FIG. 9 shows the regenerative forwarding satellite network architecture in the 5G scenario.

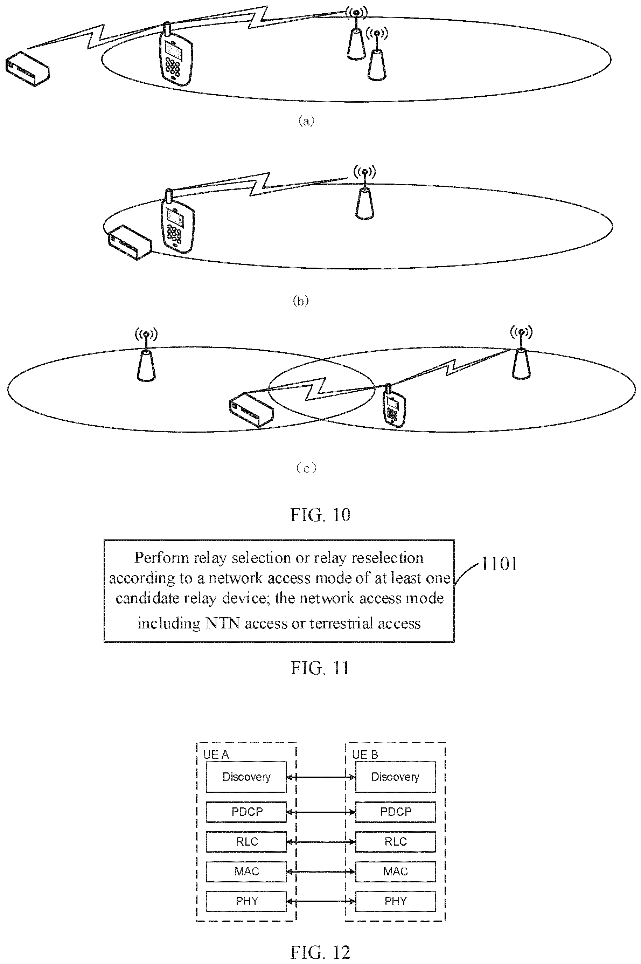

For a remote device (remote UE) and a relay device (relay UE), UE-to-Network Relay can enhance coverage and realize terminal energy saving. As shown in (a), (b) and (c) in FIG. 10, UE-to-Network Relay may include three coverage scenarios, and the three coverage scenarios are described by taking a case where a UE accesses a network by connecting to a base station in a terrestrial communication network as an example. As shown in (a) of FIG. 10, the relay UE of UE-to-Network is within the coverage of a base station. The remote UE is not within the coverage of the base station, that is, outside the coverage of the base station. As shown in (b) of FIG. 10, both the relay UE and remote UE of UE-to-Network are within the coverage of one base station. As shown in (c) of FIG. 10, the relay UE and the remote UE of UE-to-Network are in different cells.

Taking UE-to-Network Relay of Rel-17 as an example, relay UE and gNB (next generation NodeB) adopt NR (New Radio) Uu interface, and the sidelink between relay UE and remote UE adopts PC5 interface. The cross-RAT UE (remote UE or relay UE) configuration and control are not considered, that is, eNB/ng-eNB cannot control and configure NR remote UE and relay UE. For UE-to-Network Relay, unicast data transmission is adopted between the remote UE and the data network. After the PC5-RRC connection is established between the relay UE and the remote UE, unicast data relay between the remote UE and the data network can be realized.

After the connection is established through the PC5 interface, the Uu RRC states of the relay UE and the remote UE may change. The relay UE and the remote UE can perform relay discovery in any RRC state. When the remote UE is not within the coverage of Uu, the remote UE may perform relay discovery. The relay UE needs to be in RRC_CONNECTED state to perform unicast data relay.

Relay selection refers to a procedure in which a remote device selects a relay device for access. Relay reselection refers to a procedure in which a remote device is currently connected to a relay device and reselects a relay device for access when a trigger condition is satisfied. The relay selection and relay reselection are relay determination procedures, that is, the procedure of determining a relay device to be accessed by the remote device. The process of the relay determination method will be described in detail below through the embodiment shown in FIG. 11.

FIG. 11 shows a flowchart of a relay determination method provided in an exemplary embodiment of the present disclosure. The method is executed by a remote device, and the method includes:
In step 1101, relay selection or relay reselection is performed according to a network access mode of at least one candidate relay device. The network access mode includes NTN access or terrestrial access.

The NTN access refers to non-terrestrial communication network access. The terrestrial access refers to Terrestrial Communications Network (TCN) access.

Different network access modes may involve different network elements. For example, NTN access may perform access through satellite communication, and the network elements involved may include a satellite and a ground network device. A relay device is connected to the satellite, and the satellite is connected to a network device connected to a data network on the ground. In this way, the relay device performs data interaction with the data network through the satellite. Base station access may be used for ground communication network access, and the involved network elements may include a base station, and a relay device is connected to base station, data interactions with the data network may be performed through the base station.

Understandably, in the terrestrial access, the UE is directly connected to the base station. In NTN access, the UE and the base station need to use the signal forwarding function of the satellite to realize data interactions, and the distance between the UE and the satellite and the distance between the satellite and the ground network device are too large, which will inevitably lead to the data transmission speed of NTN access lower than that of terrestrial access, and the delay of data transmission between the UE and the data network during NTN access will be greater than that of terrestrial access.

In view of the different data transmission delays in different network access modes as described above, when relay selection or relay reselection is performed, the network access mode of at least one candidate relay device is considered, and the remote device learns the network access mode of the at least one candidate relay device, and use this as the basis for relay selection or relay reselection, and a candidate relay device with a relatively small transmission delay can be selected to access a better cell. This can improve the communication service quality of a cell accessed by the remote device, and avoid a situation where the remote device selects a candidate relay device which is connected to a ground base station through a satellite in a case where the remote device does not know the network access mode of the candidate relay device, and thus the communication service quality of the accessed cell is relatively poor and some service requirements of the remote device cannot be met, in particular, some delay-sensitive services of the remote device, for example, the delay-sensitive services may be instant messaging services, audio and video live streaming services, and the like.

In some embodiments, the network access mode of a candidate relay device is carried in a discovery message of the candidate relay device. The sending of the discovery message may include two modes, which means that the UE-to-Network Relay supports two discovery models, Model A and Model B. In Model A, a candidate relay device may send a discovery message. After receiving the discovery message of the candidate relay device, a remote device may perform relay selection or relay reselection. In Model B, a remote device may send a discovery message, and a candidate relay device and a remote device may also send a discovery message. The remote device may send a discovery message, and a candidate relay device may send a discovery message after receiving the discovery message from the remote device. When the remote device receives the discovery message of the candidate relay device, relay selection may be performed.

By carrying the network access mode in a discovery message of a candidate relay device, a remote device can clearly know the network access mode of the candidate relay device after receiving the sent message, and then can select a suitable candidate relay device based on the network access mode to meet the service requirements of the remote device itself. The discovery message is a basic message in the procedure of relay selection or relay reselection. By carrying the network access mode in the discovery message, the notification of the network access mode can be realized without a large number of modifications to the existing discovery mechanism. The implementation is simple, easy to configure, and has good practicability.

The protocol stack of the discovery message is shown in FIG. 12. Assuming that a remote device and a relay device are UE A and UE B, respectively, both UE A and UE B can send a discovery message when being triggered by a higher layer. The sending of the discovery message may be supported by a Radio Resource Control (RRC) layer in UE, and the RRC layer is used to support system messages, admission control, security management, measurement and reporting, handover and mobility, NAS message transmission, and radio resource management. The lower layers of the RRC layer are a Packet Data Convergence Protocol (PDCP) layer, a Radio Link Control (RLC) layer, a Media Access Control (MAC) layer and a Physical (PHY) layer. The PDCP layer is used for transmission of user plane and control plane data, maintaining PDCP SN numbers, routing and repetition (dual connection scenario), encryption/decryption and integrity protection, reordering, support for out-of-order delivery, duplicate discarding, ROHC (user plane). The RLC layer is used for error detection, error correction ARQ (AM entity); segment reassembly (UM entity and AM entity); re-segmentation (AM entity); repeated packet detection (AM entity). The MAC layer is used for mapping between logical channels and transport channels, multiplexing/demultiplexing, scheduling, HARQ, and logical channel priority setting. The physical layer provides radio resources and physical layer processing for higher layer data. The higher layers refer to a layer higher than the physical layer.

The relay UE may have the following characteristics related to sending of the discovery message.

Characteristic 1: when in the RRC_IDLE or RRC_INACTIVE state, if a base station provides the minimum and maximum Uu signal strength thresholds, the relay UE sends discovery message within the minimum and maximum Uu signal strength thresholds. If the base station does not provide the minimum and maximum Uu signal strength thresholds, the relay UE may send a discovery message based on pre-configuration. According to different accessed networks, the base station can be different. For example, in a 3G network environment, the base station is an NB. In a 4G network environment, the base station is an eNB. In the 5G network environment, the base station is a gNB.

Characteristic 2: the relay UE is allowed to send a discovery message in all RRC states according to sidelink communication configuration provided by the base station.

Characteristic 3: when a relay UE based on layer 3 relay UE-to-network Relay is connected to a base station that does not have the capability of sidelink relay operation, if its serving carrier is not shared with the sidelink carrier, the relay UE is allowed to send a discovery message at least based on pre-configuration.

Characteristic 4: relay UE which is based on layer 2 UE-to-network Relay should always be connected to a base station capable of sidelink relay operation, and the base station should be able to provide the configuration for discovery message transmission.

The remote UE may have the following characteristics related to sending of discovery messages.

Characteristic 1: when the signal strength measured in the serving cell is lower than a configured threshold, a remote UE in the RRC_IDLE and RRC_INACTIVE states is allowed to send a discovery message.

Characteristic 2: whether the remote UE in the RRC_CONNECTED state is allowed to send a discovery message depends on the configuration provided by a serving base station. The configuration details provided by the serving base station need further discussion.

Characteristic 3: the remote UE does not need additional network configuration for Uu measurement in RRC_IDLE or RRC_INACTIVE state.

Characteristic 4: a remote UE that is not within the coverage of the base station is always allowed to transmit a discovery message based on pre-configuration when it is not connected to a network through a relay UE.

Characteristic 5: when a remote UE that supports UE-to-network Relay is directly connected to a base station that does not have sidelink relay operation, if its serving carrier is not shared with the sidelink carrier, it is allowed to send a discovery message at least based on pre-configuration.

Characteristic 6: for a remote UE which is based on layer 3 relay UE-to-network Relay, if the remote UE is not within the coverage of the base station and is indirectly connected to a base station, it is impossible for the serving base station to provide radio configuration to send a discovery message.

Characteristic 7: for a remote UE which is based on layer 2 relay UE-to-network Relay, if the remote UE is not within the coverage of the base station and is indirectly connected to a base station, it is allowed or not allowed to send a discovery message according to configuration provided by the base station.

The above embodiments are described by taking a case where the network access mode of a candidate relay device may be carried in a discovery message as an example, In some embodiments, the network access mode of a candidate relay device is indicated by at least one of: first indication information, second indication information, delay information of a first communication link, third indication information or fourth indication information. These types of information are described below.

The first indication information is used to indicate whether a first communication link is accessed through NTN. The first communication link is a communication link between a candidate relay device and a base station. That is, the first indication information is used to indicate whether the first communication link is accessed through NTN or through terrestrial access. It can be understood that, in a case where first indication information indicates that the first communication link is accessed through NTN, the network access mode of the candidate relay device is NTN access. In a case where the first indication information indicates that the first communication link is not accessed through NTN, or in a case where the first indication information indicates that the first communication link is accessed through the terrestrial access, the network access mode of the candidate relay device is the terrestrial access.

The first communication link may be a Uu link, that is, the communication between the candidate relay device and the base station is implemented based on the Uu interface. In communications of 5G NR system, a UE accesses a gNB in the 5G NR system through the Uu interface, and Uu interface is the most important open interface in the 5G NR system.

Optionally, the first indication information may be represented by 0 or 1. The first indication information being 0 or 1 is respectively used to indicate the NTN access or the terrestrial access. For example, the first indication information is 0, and the first indication information is used to indicate that the first communication link is accessed through the NTN. The first indication information is 1, and the first indication information is used to indicate that the first communication link is accessed through the terrestrial access. Of course, it can also be set in reverse, for example, the first indication information is 0, and the first indication information is used to indicate that the first communication link is accessed through the terrestrial access. The first indication information is 1, and the first indication information is used to indicate that the first communication link is accessed through the NTN. Whether the first indication information is represented by 0 or 1, and the value and indicated content of the first indication information can be set by relevant technical personnel according to requirements, which is not limited in embodiments of the present disclosure.

Optionally, the first indication information may be 1-bit information. Optionally, the information amount of the first indication information may not be 1 bit, but may be other value(s), which is not limited in embodiments of the present disclosure.

The second indication information is used to indicate an NTN type of the first communication link. The NTN type may be determined according to the type of the satellite to which the first communication link is connected. For example, the NTN type may include GEO, LEO, or High Altitude Platform Station (HAPS). For another example, the NTN type may include MEO, HEO, or other types in addition to GEO, LEO, or HAPS. This embodiment of the present disclosure does not specifically limit which types the NTN type includes.

Understandably, if the network access mode of a candidate relay device is indicated by the second indication information, the network access mode of the candidate relay device is the NTN access. The second indication information not only indicates that the candidate relay device performs access through the NTN, but also indicates which type of satellite the candidate relay device accesses.

Optionally, the second indication information may be about 2 bits of information. Optionally, the information amount of the first indication information may be other value(s) instead of 2 bits, which is not limited in embodiments of the present disclosure.

The delay information of the first communication link is used to indicate the delay of the first communication link, that is, may indicate the signal quality of the first communication link. Generally, the delay of the first communication link accessed by the NTN is greater than the delay of the first communication link accessed by the terrestrial access. A first threshold may be set to divide delay information of different network access modes. In a case where the delay information is greater than the first threshold, the network access mode of the candidate relay device is NTN access. In a case where the delay information is less than or equal to the first threshold, the network access mode of the candidate relay device is the terrestrial access.

The first threshold may be pre-configured, or configured by the base station, or determined according to the type of the remote device, or determined according to a service type registered by the remote device. In embodiments of the present disclosure, the value of the first threshold is not limited, and its configuration or determination manner is not limited.

Optionally, the delay information of the first communication link may adopt different quantized delay levels. For example, different delay ranges may be set, and different delay ranges correspond to different delay levels. The delay level of the first communication link may be determined by determining in which delay range the delay of the first communication link falls. The number of delay levels may be two or more, which is not limited in this embodiment of the present disclosure. Carrying the quantized delay level during signaling transmission can better reduce the signaling overhead than carrying a unquantized delay level.

The third indication information is used to indicate a cell type of a NTN cell of the first communication link. The cell type of the NTN cell may include an earth fixed type and an earth moving type. In a specific possible embodiment, the earth fixed type is represented by an earth fixed cell, and the earth moving type is represented by an earth moving cell.

The cell type of the NTN cell of the first communication link is earth fixed cell, which means that the satellite that a candidate relay device accesses is GEO, GEO is synchronous with the rotation of the earth, and a cell range for providing services for the ground by GEO can be fixed, and thus the GEO serving cell is called an earth fixed type (earth fixed cell).

The type of the NTN cell of the first communication link is earth moving cell, which means that the satellite that a candidate relay device accesses is not GEO, and the satellite is not synchronized with the rotation of the earth, the cell range where the satellite provides services for the ground changes, so it is called the earth moving cell.

The fourth indication information is used to indicate remaining cell service time or cell service stop time moment of the NTN cell of the first communication link. The fourth indication information may be represented by cell leaving time. The remaining cell service time represents a period of time, that is, how long the NTN cell can still provide services. For example, the remaining cell service time is 5 minutes (min). The cell service stop time moment indicates a certain time point, that is, when the NTN cell stops provide services. For example, the service stop time moment of the cell is 15:00 today, which is used to indicate that the service of the NTN cell is stopped at 15:00 today. The service stop time moment of the cell may adopt Universal Time Coordinated (UTC), and the UTC is also called Universal Time, Universal Standard Time, or International Coordinated Time. The cell service stop time moment may also adopt other time, for example, time in a certain international time zone. The embodiment of the present disclosure does not limit which time is used for the cell service stop time moment.

In addition to the above cases where the network access mode is indicated by at least one of the above information, there is another case: the discovery message of a candidate relay device not carrying any of the above information may be understood that the network access mode the candidate relay device is the terrestrial access.

The method of indicating the network access mode through at least one of the above information is flexible and intuitive, and can clearly inform the remote device of the network access mode of the candidate relay device. In some cases, more information of the candidate relay device may be notified to the remote device, so that the remote device can select a better candidate relay device when performing relay selection, so as to improve the communication service quality.

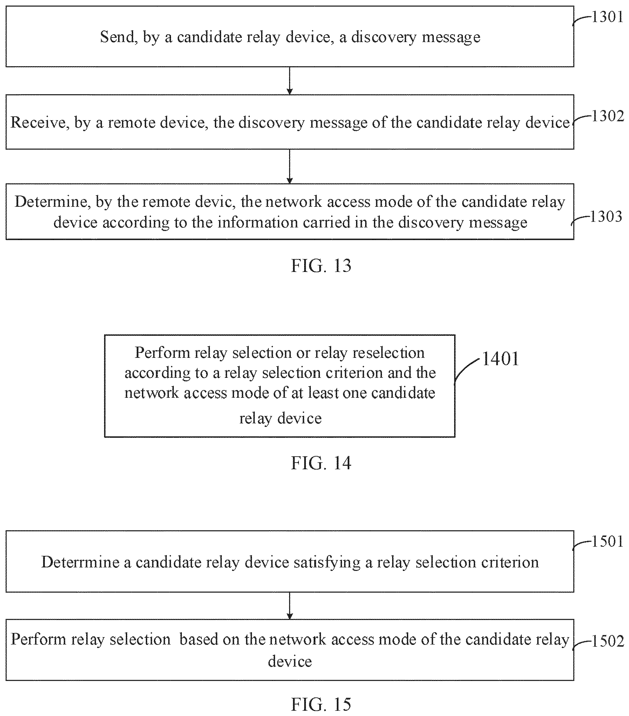

In some embodiments, the network access mode of a candidate relay device is indicated by the at least one type of the above information. Correspondingly, the network access mode of the candidate relay device may be determined based on at least one of the above information carried in the discovery message of the candidate relay device. Specifically, as shown in FIG. 13, the procedure of determining the network access mode of the candidate relay device may be determined through the following steps 1301 to 1303.

In step 1301, a candidate relay device sends a discovery message.

In step 1302, a remote device receives the discovery message of the candidate relay device.

In step 1303, the remote device determines the network access mode of the candidate relay device according to the information carried in the discovery message.

Several methods for determining the network access modes of candidate relay devices are provided below, and the embodiments of the present disclosure do not limit the specific determination method. There is no limit to the order of the following determination methods, and at least one of the following determination methods may be used.

Determination method 1: in a case where the discovery message of the candidate relay device carries the first indication information and the first indication information is 0, it is determined that the network access mode of the candidate relay device is the NTN access; in a case where the discovery message of the candidate relay device carries the first indication information and the first indication information is 1, it is determined that the network access mode of the candidate relay device is the terrestrial access.

Determination method 2: in a case where the discovery message of the candidate relay device carries the first indication information and the first indication information is 0, it is determined that the network access mode of the candidate relay device is the terrestrial access; in a case where the discovery message of the candidate relay device carries the first indication information and the first indication information is 1, it is determined that the network access mode of the candidate relay device is the NTN access.

The determination method 1 and the determination method 2 are cases where the discovery message carries the first indication information, and the first indication information is 0 or 1. In the determination method 1 and the determination method 2, the network access mode of the candidate relay device is indicated by the first indication information. It has also been explained in the introduction of the first indication information that whether the first indication information is represented by 0 or 1 and the value and indicated content of the first indication information can be set by relevant technical personnel according to requirements. For example, the first indication information may also be represented by 1 or 2, which is not limited in this embodiment of the present disclosure.

Determination method 3: in a case where the discovery message of the candidate relay device carries any one of the second indication information, the third indication message, or the fourth indication information, it is determined that the network access mode of the candidate relay device is the NTN access.

In the determination method 3, the discovery message carrying any of the second indication information, the third indication message, or the fourth indication information includes the following situations:
Case 1: the discovery message carries one of three kinds of information: carrying the second indication information, carrying the third indication message, or carrying the fourth indication message.
Case 2: the discovery message carries two of three kinds of information: carrying the second indication information and the third indication information, carrying the second indication information and the fourth indication information, or carrying the third indication information and the fourth indication information.
Case 3: the discovery message carries three kinds of information: the second indication information, the third indication message and the fourth indication information.

The second indication information, the third indication message, and the fourth indication information all further indicate NTN cell-related situation. If the discovery message of the candidate relay device carries any one of the second indication information, the third indication message, or the fourth indication information, it means that the network access mode of the candidate relay device is the NTN access. Further, depending on the information carried in the discovery message, it is also possible to further determine related situation of the NTN cell of the candidate relay device from the discovery message, such as the NTN type, the cell type of the NTN cell, the remaining cell service time or cell service stop time moment of the NTN cell, etc.

Determination method 4: in a case where the discovery message of the candidate relay device carries delay information of the first communication link and the delay information is greater than the first threshold, it is determined that the network access mode of the candidate relay device is the NTN access. The first communication link is a communication link between the candidate relay device and the base station.

Determination method 5: in a case where the discovery message of the candidate relay device carries delay information of the first communication link and the delay information is less than or equal to the first threshold, the network access mode of the candidate relay device is the terrestrial access.

In the determination method 4 and the determination method 5, the NTN access and the terrestrial access can be distinguished through the relationship between the delay information of the first communication link and the first threshold. The delay information of the first communication link for the NTN access is greater than the first threshold, and the delay information of the first communication link for the terrestrial access is less than or equal to the first threshold.

Determination method 6: in a case where the discovery message of the candidate relay device does not carry any of the first indication information, the second indication information, the delay information of the first communication link, the third indication information, and the fourth indication information, it is determined that the network access mode of the candidate relay device is the terrestrial access.

In the determination method 6, the discovery message of the candidate relay device not carrying any of the above information may be understood that the candidate relay device is a candidate relay device of terrestrial access. The discovery message of the candidate relay device performing access through the NTN indicates, by carrying the above information, that the relay candidate device performs access through NTN. That is, if the first communication link between the candidate relay device and the base station is established through NTN, its discovery message additionally includes one or more of the above five kinds of information.

The above contents have focused on the indication and determination of the network access mode of the candidate relay device. Through the network access mode of the candidate relay device, the remote device can know whether the candidate relay device accesses the network through the NTN or through the terrestrial access. It can be understood that the delay between the candidate relay device and the network for terrestrial access is relatively small, and the remote device can give priority to a candidate relay device whose network access mode is the terrestrial access when performing relay selection or relay reselection.

In some embodiments, when performing relay selection and relay reselection, in addition to the network access mode of at least one candidate relay device, the remote device may also consider a relay selection criterion for relay selection or relay reselection. As shown in FIG. 14, the relay determination method includes:
In step 1401, relay selection or relay reselection is performed according to a relay selection criterion and the network access mode of at least one candidate relay device.

The relay selection criterion includes at least one of a first criterion or a second criterion. That is, the relay selection criterion includes the first criterion. Alternatively, the relay selection criterion includes the second criterion. Alternatively, the relay selection criterion includes the first criterion and the second criterion.

The first criterion includes that a signal quality of a second communication link between the remote device and a candidate relay device satisfies a first condition.

The second communication link is a communication link between the remote device and a candidate relay device, and is a direct communication link between UEs. The first criterion may be called an Access Stratum (AS) criterion.

In some embodiments, the second communication link may be a PC5 link, and the PC5 link is a direct link. That is, the remote device communicates with the candidate relay device through the PC5 interface. The link between the remote device and the candidate relay device may be called a sidelink, and the sidelink uses the PC5 interface. The signal quality of the second communication link is the signal quality of the PC5 link, and the procedure of determining the signal quality of the PC5 link is a measurement procedure of the PC5 interface.

The measurement procedure of the PC5 interface or the procedure of determining the signal quality of the PC5 link may be implemented in various ways.

In some embodiments, when performing relay selection and relay reselection, the remote device may use radio signal strength measurements of sidelink discovery message to evaluate the signal quality of the PC5 link of the candidate relay device. Specifically, the remote device may obtain the radio signal strength of the discovery message of the candidate relay device, and use the radio signal strength as the signal quality of the PC5 link of the candidate relay device.

When performing relay reselection, the remote device has already been connected to a relay device, and when determining the signal quality of the PC5 link of the relay device, the SL-RSRP (Sidelink-Reference Signal Receiving Power) of the sidelink unicast link is measured to evaluate the signal quality of the PC5 link of the relay device. Specifically, the remote device may obtain the reference signal received power of the connected relay device on the sidelink. If the remote UE has a PC5-RRC connection with the relay UE, how to perform RSRP measurement based on the SL-RSRP and/or the RSRP of the discovery message needs further discussion and decision. If there is no transmission on the sidelink unicast link, the measurement criterion of the signal quality of the PC5 link needs to be further discussed, and this embodiment of the present disclosure does not describe too much here.

In some embodiments, the signal quality of the second communication link satisfying the first condition may be that the signal quality of the second communication link is greater than a certain threshold value, or may be that a difference between the signal quality of the second communication link and the best signal quality is within a threshold range. The first condition may be pre-configured, or may be pre-configured by the base station, or may be determined according to a type of the remote device, or may be determined according to the service type registered by the remote device. The embodiment of the present disclosure does not limit the first condition.

The second criterion is that a candidate relay device satisfies a higher layer criterion.

The higher layer criterion may mean that a higher layer of a candidate relay device satisfies a second condition. The second condition may be set by relevant technical personnel according to requirements, which is not limited in this embodiment of the present disclosure.

Optionally, the above-mentioned first criterion is a criterion of the access stratum, and the second criterion is a criterion of the non-access stratum.

For example, the second criterion may include a PLMN (Public Land Mobile Network)-based relay selection criterion. When performing relay selection according to the PLMN-based relay selection criterion, a PLMN selection procedure and a relay selection procedure are included.

In the PLMN selection procedure, the remote device receives one or more PLMNs, and then checks whether these PLMNs are authorized for ProSe scenarios, so as to determine available PLMNs. The remote device selects a PLMN from the available PLMNs according to the configuration.

The selected PLMN is a PLMN selected by the Non-Access Stratum (NAS). It can be understood that the number of PLMNs supported by a candidate relay device is one or more, and the number of candidate relay devices is one or more.

During the relay selection procedure, according to the PLMN selected by the NAS, the remote device selects a candidate relay device supporting the PLMN.

Here, an example of a higher layer criterion for relay selection based on the PLMN is provided, and the higher layer criterion may also include other criterion, which are not listed here and are not limited in this embodiment of the present disclosure.

In these embodiments, the procedure of relay selection or relay reselection comprehensively considers the relay selection criterion and the network access mode of at least one candidate relay device, the remote device can select a candidate relay device which satisfies the relay selection criterion and the service quality of the accessed cell determined according to the network access mode is high. As compared with a manner in which relay selection is performed based on a single factor, the relay selection or reselection in the present disclosure considers comprehensive factors, and thus the selection result is better.

In some embodiments, in a case where there is at least one candidate relay device whose network access mode is the NTN access, the remote device performs relay selection or relay reselection according to the network access mode of the at least one candidate relay device, or, relay selection or relay reselection is performed according to the network access mode of the at least one candidate relay device and the relay selection criterion. In a case where the network access modes of all candidate relay devices are the terrestrial access, the remote device performs relay selection or relay reselection according to the relay selection criterion.

Trigger conditions and specific determination procedures for relay selection and relay reselection may be the same or different. The relay selection and relay reselection will be described separately below.

The trigger conditions for relay selection are described here. The trigger condition for relay selection may be any one of the following two trigger modes.

Trigger mode 1: the signal quality of the direct communication link of the remote device is lower than a first threshold.

The remote device may be located in a cell, and the remote device may be connected to a base station of the cell to access a network. Herein, the communication link between the remote device and the base station is referred to as the direct communication link of the remote device. Understandably, the signal quality of the direct communication link directly affects the data service quality of the remote device. If the signal quality of the direct communication link of the remote device is lower than the first threshold, it means that the current data service quality of the remote device is relatively poor, and better data services can be provided for the remote device through relay selection, and thus relay selection may be triggered.

The first threshold may be pre-configured, or may be pre-configured by the base station, or may be determined according to the type of the remote device, or determined according to the service type registered by the remote device. The embodiment of the present disclosure does not limit the value and determination method of the first threshold.

Trigger mode 2: a higher layer trigger of the remote device.

The higher layer refers to a layer higher than the physical layer. The higher layer of the remote device indicates to perform relay selection when a certain condition is satisfied. For example, the remote device may be out of coverage and unable to access the network, so the higher layer triggers relay selection to access the network through the relay device. For another example, the remote device starts a delay-sensitive service or a service with a large amount of data, etc., which cannot be supported by the current direct communication link, and the higher layer may trigger relay selection.

After relay selection is triggered by the above trigger condition, the remote device may perform relay selection according to the network access modes of candidate relay devices. When performing relay selection according to the relay selection criterion and the network access modes of the relay devices, the candidate relay devices can be filtered through the relay selection criterion, and then the relay selection is performed based on the network access modes. Thus, the twice filtering is completed, and a more suitable candidate relay device can be selected through the filtering process, so as to ensure the quality of service of the accessed cell.

When performing relay selection, one-by-one selection or collective selection may be performed. In the one-by-one selection mode, one relay device is determined each time, and then a relay selection is performed on the relay device to determine whether to access the candidate relay device. It should be noted that determining a relay device refers to determining and determining only one relay device. In the collective selection mode, all candidate relay devices that satisfy the relay selection criterion are determined first, that is, a first set of candidate relay devices that satisfy the relay selection criterion are obtained, and then further selection is made among the first set of candidate relay devices. It should be noted that the number of candidate devices in the first set of candidate relay devices determined by the collective selection method may be one or more. If the first set of candidate relay devices only contain one candidate relay device, processing is performed according to the collective selection mode. For details, reference may be made to the content of the collective selection method below.

The two modes are described below.

As shown in FIG. 15, a process of one-by-one selection is shown. The process includes step 1501 and step 1502.

In step 1501, a candidate relay device satisfying a relay selection criterion is determined.

In step 1502, relay selection is performed based on the network access mode of the candidate relay device.

The one-by-one selection mode refers to determining one candidate relay device at a time, and then performing relay selection on the candidate relay device based on the network access mode of the candidate relay device. If the remote device selects the candidate relay device determined this time, the process of determining the candidate relay device and relay selection may be stopped, that is, no new candidate relay device needs to be discovered. If the remote device abandons accessing the candidate relay device determined this time, it can continue to discover a candidate relay device, and when another candidate relay device is determined next time, it can perform relay selection again.

Specifically, the relay selection procedure may be any of the following cases.

Case 1: if the network access mode of the candidate relay device is the terrestrial access, the candidate relay device is selected; if the network access mode of the candidate relay device is the NTN access, accessing the candidate relay device is abandoned.

In case 1, the delay of the first communication link for the NTN access is greater than the delay of the first communication link for the terrestrial access. During relay selection, a candidate relay device of terrestrial access is preferentially selected. Therefore, when it is determined that the network access mode of the candidate relay device is the terrestrial access, the candidate relay device may be selected; otherwise, accessing the candidate relay device is abandoned. After abandoning access, the remote device can continue to discover another candidate relay device.

In a specific possible embodiment, the discovery message of the candidate relay device carries the first indication information. When the remote device determines that the network access mode is the terrestrial access according to the first indication information, the remote device selects the candidate relay device. When the remote device determines that the network access node is the NTN access according to the first indication information, the remote device abandons accessing the candidate relay device.

Case 2: When the delay information of the first communication link of the candidate relay device is less than or equal to the first threshold, the candidate relay device is selected. The first communication link is a communication link between the candidate relay device and the base station. When the delay information of the first communication link of the candidate relay device is greater than the first threshold, the remote device abandons accessing the candidate relay device.

In case 2, if the delay information of the first communication link is less than or equal to the first threshold, it means that the network access mode of the candidate relay device is the terrestrial access. If the delay information of the first communication link of the candidate relay device is greater than the first threshold, it means that the network access mode of the candidate relay device is the NTN access. The delay of the first communication link for the NTN access is greater than the delay of the first communication link for the terrestrial access. During relay selection, a candidate relay device of terrestrial access is preferentially selected. Therefore, when it is determined that the network access mode of the candidate relay device is the terrestrial access, the candidate relay device may be selected; otherwise, accessing the candidate relay device is abandoned. After abandoning access, the remote device can continue to discover another candidate relay device.

Or to put it another way, if the delay information of the first communication link is less than or equal to the first threshold, it means that the signal quality of the first communication link of the candidate relay device is relatively good, and the delay is very small, and a high cell service quality can be obtained if the candidate relay device is accessed. Thus, the remote device can select to accessing the candidate relay device. On the contrary, if the delay information of the first communication link of the candidate relay device is greater than the first threshold, it means that the signal quality of the first communication link of the candidate relay device is not very good, and the delay is relatively large, and a low cell service quality can be obtained if the candidate relay device is accessed. Thus, the remote device can abandon accessing the candidate relay device, and discover another candidate relay device.

In a specific possible embodiment, the discovery message of the candidate relay device carries the delay information of the first communication link. The remote device determines whether to select the candidate relay device according to the relationship between the delay information of the first communication link and the first threshold.

Case 3: When the cell type of the NTN cell of the candidate relay device is the earth fixed type, the candidate relay device is selected; when the network access mode of the candidate relay device is the earth moving type, the accessing the candidate relay device is abandoned.

In case 3, the earth fixed type can provide more stable cell services with better signal quality than the earth moving type. Therefore, when performing relay selection, a candidate relay device whose cell type is the earth fixed type is preferentially selected.

In a specific possible embodiment, the discovery message of the candidate relay device carries third indication information. When the remote device determines that the cell type of the NTN cell is the earth fixed type according to the third indication information, the remote device selects the candidate relay device. When the remote device determines that the cell type of the NTN cell is the earth moving type according to the third indication information, the remote device abandons accessing the candidate relay device.

Case 4: When the remaining cell service time of the NTN cell of the candidate relay device is greater than or equal to the second threshold, the candidate relay device is selected; when the remaining cell service time of the NTN cell of the candidate relay device is less than the second threshold, accessing the candidate relay device is abandoned.

In case 4, the remaining cell service time can indicate how long the candidate relay device can still provide cell services. Understandably, in order to ensure that the service processing procedure will not be interrupted suddenly, the remote device may select a candidate relay device whose remaining cell service time is greater than or equal to the second threshold, so as to ensure that the service can be performed normally.

The second threshold may be pre-configured, configured by the base station, determined according to the type of the remote device, or determined according to the service type registered by the remote device. The embodiment of the present disclosure does not specifically limit the value and determination method of the second threshold.

The remaining cell service time being greater than or equal to the second threshold may be considered that the candidate relay device can provide service for a sufficient time to ensure normal operation of the service. The remaining cell service time being less than the second threshold may be considered that the service time of the candidate relay device is too short, and service processing may be interrupted due to the stop of the service time of the candidate relay device.

In a specific possible embodiment, the discovery message of the candidate relay device carries fourth indication information. The remote device determines whether to select the candidate relay device according to the magnitude relationship between the fourth indication information and the second threshold. The fourth indication information is in the form of remaining cell service time.

Case 5: When a difference between cell service stop time moment of the NTN cell of the candidate relay device and system time is greater than or equal to the second threshold, the candidate relay device is selected; when the difference between cell service stop time moment of the NTN cell of the candidate relay device and system time is less than the second threshold, accessing the candidate relay device is abandoned.

In case 5, the cell service stop time moment can actually be used to determine how long the candidate relay device can provide service. The difference between the cell service stop time moment and the system time is the above remaining cell service time.

In some other embodiments, the remote device may also compare the cell service stop time moment with the service end time of the remote device, and in a case where the cell service stop time moment is after the service end time, the candidate relay device is selected. In a case where the cell service stop time moment is before the service end time, the accessing the candidate relay device is abandoned.

In a specific possible embodiment, the discovery message of the candidate relay device carries fourth indication information. The remote device determines whether to select the candidate relay device according to the relationship between the difference between the fourth indication information and the system time and the second threshold. The fourth indication information is in the form of cell service stop time moment.

The above provides five possible cases, but the present disclosure is not limited to including only the above five cases, and the relay selection procedure can also be performed according to other cases. For example, in a case, when the difference between the cell service stop time moment of the NTN cell of the candidate relay device and the system time is less than or equal to a third threshold, the candidate relay device is selected; otherwise, accessing the candidate relay device is abandoned. In another case, if the remaining cell service time of the NTN cell of the candidate relay device is less than or equal to the third threshold, the candidate relay device is selected; otherwise, accessing the candidate relay device is abandoned.

The third threshold may be pre-configured, configured by the base station, determined according to the type of the remote device, or determined according to the service type registered by the remote device. The embodiment of the present disclosure does not limit the value and determination method of the third threshold.

In these two cases, it is possible that the current service of the remote device may be to send a message once, and the candidate relay device is not required to have long service time. Therefore, the remote device may select a candidate relay device having small remaining cell service time as much as possible, so as to reserve a candidate relay device having relatively long remaining cell service time for other remote devices in need.

The above one-by-one selection mode is to perform relay selection on the candidate relay devices one by one according to the network access modes of the candidate relay devices, and stop the selection until any candidate relay device is selected. If expressed in another way, the one-by-one selection method may include a case of discovering multiple times, and another case is that only one candidate relay device is discovered when discovery of a candidate relay device is performed. That is, after a candidate relay device is discovered once, no other candidate relay device is discovered subsequently. If discovery of a candidate relay device is only once, the remote device can perform processing according to any one of the above five cases. If discovery is performed multiple times, the relay selection procedure may also be explained through the following descriptions.

An i-th candidate relay device that satisfies the relay selection criterion is determined, and in a case where the i-th candidate relay device among multiple candidate relay devices satisfies any selection condition in a third selection condition set, the i-th candidate relay device is selected, where i is an integer; in a case where the i-th candidate relay device does not satisfy any selection condition in the third selection condition set, the relay selection is performed for an (i+1)-th candidate relay device which satisfies the relay selection criterion.

The third selection condition set includes at least one of the following selection conditions:
the network access mode is terrestrial access;
the delay information of the first communication link is less than or equal to the first threshold, where the first communication link is the communication link between the i-th candidate relay device and the base station;
the cell type of the NTN cell is the earth fixed type;
the remaining cell service time of the NTN cell is greater than or equal to the second threshold; or
the difference between the cell service stop time moment of the NTN cell and the system time is greater than or equal to the second threshold.

In the collective selection mode, the candidate relay devices can be directly processed in a collective manner. First, all candidate relay devices that satisfy the relay selection criterion are determined, the determined candidate relay devices are taken as a first set of candidate relay devices, and then relay selection is performed among the determined first set of candidate relay devices.

Specifically, the collective selection mode can be realized through steps 1 and 2.

In step 1, a first set of candidate relay devices satisfying the relay selection criterion are determined.

In step 2, among the first set of candidate relay devices, relay selection is performed based on the network access modes of the candidate relay devices.

In step 1, the remote device can first determine all candidate relay devices that satisfy the relay selection criterion, and this determination step has selected out all candidate relay devices that need to be further selected based on the network access modes. Subsequently, the remote device can perform selection among the first set of candidate relay devices in step 2, and no other candidate relay devices are discovered. In this way, all candidate relay devices satisfying the relay selection criterion are collectively determined, and then the most suitable candidate relay device is preferentially selected according to the network access modes, which can greatly guarantee the communication quality of the selected candidate relay device.

The first set of candidate relay devices includes one or more candidate relay devices. The remote device determines whether a discovered candidate relay device satisfies the relay selection criterion, and if the discovered candidate relay device satisfies the relay selection criterion, the remote device adds it to the first set of candidate relay devices; if the discovered candidate relay device does not satisfy the relay selection criterion, there is no need to add it to the first set of candidate relay devices.

Through the determination, the remote device may find that there are multiple candidate relay devices satisfying the relay selection criterion, and the remote device may further determine to access a candidate relay device based on the relay selection procedure corresponding to the collective selection mode. There is another possibility: the remote device may find that there is only one candidate relay device that satisfies the relay selection criterion, and thus only one candidate relay device is included in the first candidate relay device set, and the remote device may also determine whether to access the candidate relay device based on the relay selection procedure corresponding to the collective selection mode.

The relay selection procedure corresponding to the collective selection mode may be any of the following case.
Case 1: among the first set of candidate relay devices, selection of a candidate relay device whose network access mode is the terrestrial access is prioritized.
Case 2: among the first set of candidate relay devices, selection of a candidate relay devices whose delay information of the first communication link is less than or equal to the first threshold is prioritized, where the first communication link is a communication link between the candidate relay device and the base station.
Case 3: among the first set of candidate relay devices, selection of a candidate relay device with the smallest delay information of the first communication link is prioritized.
Case 4: among the first set of candidate relay devices, selection of a candidate relay device whose network access mode is the terrestrial access is prioritized, and selection of a candidate relay device whose network access mode is the NTN access and whose cell type of a NTN cell is the earth fixed type is secondarily prioritized.
Case 5: among the first set of candidate relay devices, selection of a candidate relay device whose network access mode is the terrestrial access is prioritized, and selection of a candidate relay device whose network access mode is the NTN access and whose remaining cell service time of the NTN cell is greater than or equal to the second threshold is secondarily prioritized.
Case 6: among the first set of candidate relay devices, selection of a candidate relay device whose network access mode is the terrestrial access is prioritized, and selection of a candidate relay device whose network access mode is the NTN access and whose remaining cell service time of the NTN cell is the largest is secondarily prioritized.
Case 7: among the first set of candidate relay devices, selection of a candidate relay device whose network access mode is the terrestrial access is prioritized, and selection of a candidate relay device whose network access mode is the NTN access and whose difference between the cell service stop time moment of the NTN cell and the system time is greater than or equal to the second threshold is secondarily prioritized.
Case 8: among the first set of candidate relay devices, selection of a candidate relay device whose network access mode is the terrestrial access is prioritized, and selection of a candidate relay device whose network access mode is the NTN access and whose difference between the cell service stop time moment of the NTN cell and the system time is the biggest is secondarily prioritized.

In these eight cases, candidate relay devices for terrestrial access are selected as first preference. If the network access modes of the candidate relay devices in the determined first set of candidate relay devices are all NTN access, selection of a candidate relay device as second preference is performed according to other factors.

The above provides eight possible cases, but the present disclosure is not limited to including only the above eight cases, and the relay selection procedure can also be performed according to other cases. For example, in one case, among the first set of candidate relay devices, selection of a candidate relay device whose network access mode is the terrestrial access is prioritized, and selection of a candidate relay device whose difference between the cell service stop time moment of the NTN cell and the system time is less than or equal to the third threshold is secondarily prioritized. In another case, among the first candidate relay device set, selection of a candidate relay device whose network access mode is the terrestrial access is prioritized, and selection of a candidate relay device whose remaining cell service time of the NTN cell of the candidate relay device is less than or equal to the third threshold is secondarily prioritized. In another case, among the first set of candidate relay devices, selection of a candidate relay device whose network access mode is the terrestrial access is prioritized, and selection of a candidate relay device whose remaining cell service time of the NTN cell is the smallest is secondarily prioritized. In another case, among the first set of candidate relay devices, selection of a candidate relay device whose network access mode is the terrestrial access is prioritized, and selection of a candidate relay device whose remaining cell service time of the NTN cell is the smallest is secondarily prioritized. In the first set of candidate relay devices, selection of a candidate relay device whose network access mode is the terrestrial access is prioritized, and selection of a candidate relay device whose difference between the cell service stop time moment of the NTN cell and the system time is the smallest is secondarily prioritized.

The third threshold may be pre-configured, configured by the base station, determined according to the type of the remote device, or determined according to the service type registered by the remote device. The embodiment of the present disclosure does not limit the value and determination method of the third threshold.

In these four cases, it is possible that the current service of the remote device may be to send a message once, and the candidate relay device is not required to have long service time. Therefore, the remote device may select a candidate relay device having small remaining cell service time as much as possible, so as to reserve a candidate relay device having relatively long remaining cell service time for other remote devices in need.

It should be noted that, in a case where the first set of candidate relay devices include multiple candidate relay devices, the remote device can determine a more suitable candidate relay device from the multiple candidate relay devices based on the foregoing cases. In a case where the first set of candidate relay devices only includes one candidate relay device, the remote device also performs relay selection through the above-mentioned cases, and the remote device does not need to compare the candidate relay device with other candidate relay devices when determining the prioritized selection scheme. Detailed descriptions are not provided here.

In some embodiments, in the above relay selection procedure, in addition to the network access mode of the at least one candidate relay device, the remote device may also consider its own characteristic. The characteristic of the remote device includes at least one of: the type of the remote device and the registered service type.

Similarly, when performing relay selection, one-by-one selection or collective selection may be performed. In the one-by-one selection mode, one relay device is determined each time, and then a relay selection is performed on the relay device according to the network access mode and the characteristic of the remote device itself to determine whether to access the candidate relay device. In the collective selection mode, all candidate relay devices that satisfy the relay selection criterion are determined first, that is, a first set of candidate relay devices that satisfy the relay selection criterion are obtained, and then further selection is made among the first set of candidate relay devices.

The two modes are described below.

In the one-by-one selection mode, the relay selection procedure can be implemented through the following steps 1 and 2.

In step 1, a candidate relay device that satisfies the relay selection criterion is determined.

In step 2, relay selection is performed based on the characteristic of the remote device itself and the network access mode of the candidate relay device.

This step 1 is the same as step 1501 in the manner of not considering the characteristic of the remote device itself, and details will not be repeated here.

The difference between this step 2 and the above step 1502 is that, in addition to the network access mode of the candidate relay device, the characteristic of the remote device is also considered.

When selecting a relay based on its own characteristic and network access mode, if there is a candidate relay device of terrestrial access, the candidate relay device of terrestrial access is selected. If there is no candidate relay device of terrestrial access, when it is determined according to the characteristic of the remote device that the NTN access is supported, a candidate relay device of NTN access may be selected.

The one-by-one selection mode refers to determining one candidate relay device at a time, and then performing relay selection on the candidate relay device based on the network access mode of the candidate relay device. If the remote device selects the candidate relay device determined this time, the process of determining the candidate relay device and relay selection may be stopped, that is, no new candidate relay device needs to be discovered. If the remote device abandons accessing the candidate relay device determined this time, it can continue to discover a candidate relay device, and when another candidate relay device is determined next time, it can perform relay selection again.

Specifically, the relay selection procedure may be any of the following cases.

Case 1: if the network access mode of the candidate relay device is the terrestrial access, the candidate relay device is selected.

Case 2: if the network access mode of the candidate relay device is the NTN access, and the characteristic of the remote device supports the NTN access, the candidate relay device is selected.

In case 2, if the remote device's own characteristic supports the NTN access, for example, the service type registered by the remote device is not a delay-sensitive service, or the device type of the remote device supports the NTN access, the remote device can choose to access the candidate relay device.

The essence of the above one-by-one selection method is to perform relay selection on the candidate relay devices one by one according to the network access modes of the candidate relay devices and the characteristic of the remote device itself, and stop the selection until any candidate relay device is selected. If expressed in another way, the one-by-one selection method may include a case of discovering multiple times, and another case is that only one candidate relay device is discovered when discovery of a candidate relay device is performed. That is, after a candidate relay device is discovered once, no other candidate relay device is discovered subsequently. If discovery of a candidate relay device is only once, the remote device can perform processing according to any one of the above five cases. If discovery is performed multiple times, the relay selection procedure may also be explained through the following descriptions.

An i-th candidate relay device that satisfies the relay selection criterion is determined, and in a case where the i-th candidate relay device satisfies any selection condition in a fourth selection condition set, the i-th candidate relay device is selected, where i is an integer; in a case where the i-th candidate relay device does not satisfy any selection condition in the fourth selection condition set, the relay selection is performed for an (i+1)-th determined candidate relay device.

The fourth selection condition set includes at least one of the following selection conditions:
the network access mode is the terrestrial access;
the delay information of the first communication link is less than or equal to the first threshold, and the characteristic of the remote device itself supports the NTN access; where the first communication link is the communication link between the i-th candidate relay device and the base station;
the cell type of the NTN cell is the earth fixed type, and the characteristic of the remote device itself supports the NTN access;
the remaining cell service time of the NTN cell is greater than or equal to the second threshold, and the characteristic of the remote device itself supports the NTN access; or
the difference between the cell service stop time moment of the NTN cell and the system time is greater than or equal to the second threshold, and the characteristic of the remote device itself supports the NTN access.

It should be noted that, unlike the previous relay selection procedure that does not consider the characteristic of the remote device itself, it is needed to consider that the characteristic of the remote device supports the NTN access when selecting a candidate relay device of NTN access. If the characteristic of the remote device does not support the NTN access, the remote device will give up accessing the candidate relay device of NTN access.

In the collective selection mode, the candidate relay devices can be directly processed in a collective manner. First, all candidate relay devices that satisfy the relay selection criterion are determined, and the determined candidate relay devices are taken as the first set of candidate relay devices, and then relay selection is performed among the determined first set of candidate relay devices.

Specifically, the collective selection mode can be realized through steps A and B.

In step A, a first set of candidate relay devices satisfying a relay selection criterion are determined.

In step B: among the first set of candidate relay devices, relay selection is performed based on the characteristic of the remote device itself and the network access modes of the candidate relay devices.

This step A is the same as the step 1 in the above-mentioned manner not considering the characteristic of the remote device itself, and will not be described in detail here.

In step B, compared with step 2 in the above-mentioned manner not considering the characteristic of the remote device itself, in addition to considering the network access modes of the candidate relay devices, the characteristic of the remote device is also considered.

The first set of candidate relay devices includes one or more candidate relay devices. The remote device determines whether a discovered candidate relay device satisfies the relay selection criterion, and if the discovered candidate relay device satisfies the relay selection criterion, the remote device adds it to the first set of candidate relay devices; if the discovered candidate relay device does not satisfy the relay selection criterion, there is no need to add it to the first set of candidate relay devices.

Through the determination, the remote device may find that there are multiple candidate relay devices satisfying the relay selection criterion, and the remote device may further determine access a candidate relay device based on the relay selection procedure corresponding to the collective selection mode. There is another possibility: the remote device may find that there is only one candidate relay device that satisfies the relay selection criterion, and thus only one candidate relay device is included in the first set of candidate relay devices, and the remote device may also determine whether to access the candidate relay device based on the relay selection procedure corresponding to the collective selection mode.

The relay selection procedure corresponding to the collective selection mode may be: among the first set of candidate relay devices, selection of a candidate relay device whose network access mode is the terrestrial access is prioritized; in a case where the characteristic of the remote device supports the NTN access, selection of a candidate relay device that satisfies any selection condition in a second selection condition set is secondarily prioritized.

The second selection condition set includes at least one of the following selection conditions:
the delay information of the first communication link is less than or equal to the first threshold, where the first communication link is a communication link between the candidate relay device and the base station;
the delay information of the first communication link is the smallest;
the cell type of the NTN cell is the earth fixed type;
the remaining cell service time of the NTN cell is greater than or equal to the second threshold;
the remaining cell service time of the NTN cell is the largest;
the difference between the cell service stop time moment of the NTN cell and the system time is greater than or equal to the second threshold;
the candidate relay device has the largest difference between the cell service stop time moment of the NTN cell and the system time.

Five specific examples are provided below for the above-mentioned relay selection procedure. In the five specific examples, the method steps in any one or more cases of the above-mentioned relay selection are respectively applied.

In the following examples, the first indication information is called indication information indicating that the Uu link between a relay UE and a gNB is the NTN access; the second indication information is called indication information indicating the NTN access type (such as GEO, LEO, etc.) of the Uu link of the relay UE; the delay information of the first communication link is called the delay information of the Uu link of the relay UE; the third indication information is called earth fixed/earth moving cell indication information; and the fourth indication information is called cell leaving time information.

### Example 1:

The discovery message of a relay UE includes the indication information indicating that the Uu link between the relay UE and the gNB is the NTN access, and/or the indication information indicating the NTN access type (such as GEO, LEO, etc.) of the Uu link of the relay UE, and/or delay information of the Uu link of the relay UE, and/or earth fixed/earth moving cell indication information, and/or cell leaving time information. The remote UE performs relay selection according to the information in the discovery message as follows:
- The remote UE confirms whether the Uu link between a relay UE and the gNB is accessed through the NTN according to the information carried in the discovery message. The confirmation method is: if the above information of the relay UE is found in the discovery message, the remote UE considers that the connection between the relay UE and the gNB is the NTN access.
- If the relay UE satisfies a RSRP-based access stratum relay selection reselection criterion and satisfies a higher layer criterion, and the Uu link is not accessed through NTN (that is, through terrestrial access), the remote UE determines that the relay UE is the selected relay UE (that is, the remote UE selects to access the relay UE).
- If the relay UE does not satisfy the RSRP-based access stratum relay selection reselection criterion, or if the relay UE does not satisfy the higher layer criterion, or if the Uu link is accessed through NTN, the remote UE determines that the relay UE is not the selected relay UE, that is, the remote UE diacards the relay UE.

### Example 2:

The discovery message of a relay UE includes the delay information of the Uu link between the relay UE and the gNB. The remote UE performs relay selection according to the delay information in the discovery message as follows:
- If the relay UE satisfies the RSRP-based access stratum relay selection reselection criterion and satisfies the higher layer criterion, and the delay information of the Uu link is less than or equal to a corresponding threshold, the remote UE determines that the relay UE is the selected relay UE. The threshold can be pre-configured or provided by the gNB through a SIB/RRC message, or can be determined by the terminal according to its own terminal type and/or registered service type (similar to Example 3).
   Or, the remote UE selects a relay UE with the smallest Uu link delay as the selected relay UE.
- If the relay UE does not satisfy the RSRP-based access stratum relay selection reselection criterion, or if the relay UE does not satisfy the higher layer criterion, or if the delay information of the Uu link between the Relay UE and the gNB is less than or equal to the corresponding threshold, the remote UE determines that the relay UE is not the selected relay UE, that is, the remote UE discards the relay UE.

### Example 3:

The discovery message of a relay UE includes the indication information indicating that the Uu link between the relay UE and the gNB is the NTN access and/or the indication information indicating the NTN access type (such as GEO, LEO, etc.) of the Uu link of the relay UE and /or delay information of the Uu link of the relay UE and/or earth fixed/earth moving cell indication information and/or cell leaving time information. The remote UE performs relay selection according to the above information in the discovery message as follows:
- The remote UE determines whether the remote UE supports the NTN access type of the Uu link of the relay UE based on its own characteristic or capability, such as the terminal type of the UE, the service type registered by the UE, etc..
- If the relay UE satisfies the RSRP-based access stratum relay selection reselection criterion and satisfies the higher layer criterion, and the remote UE's own terminal type and/or registered service type supports the relay UE, the remote UE determines that the relay UE is selected relay UE. For example, if the remote UE is an industrial sensor type terminal in the RedCap terminal, and its service is not sensitive to delay and is suitable for NTN transmission, it can be determined that the remote UE's own terminal type and/or registered service type supports the relay UE.
- If the relay UE does not satisfy the RSRP-based access stratum relay selection and reselection criterion, or if the relay UE does not satisfy the higher layer criterion, or the remote UE's own terminal type and/or registered service type does not support the relay UE, the remote UE determines that the relay UE is not the selected relay UE, that is, the relay UE is discarded. For example, Enhanced Mobile Broadband (eMBB) or wearable service types include delay-sensitive services such as voice. If the service type registered by remote UE is such a delay-sensitive service, it is not applicable to long-delay NTN transmission such as GEO, and it can be determined that the remote UE's own terminal type and/or registered service type do not support the relay UE.

### Example 4:

The discovery message of a relay UE includes earth fixed/earth moving cell indication information. The remote UE performs relay selection according to the earth fixed/earth moving cell indication information in the discovery message as follows:
- If the relay UE satisfies the RSRP-based access stratum relay selection reselection criterion and satisfies the higher layer criterion, and the NTN cell of the Uu link of the relay UE is an earth fixed cell, the remote UE determines that the relay UE is the selected relay UE.
- If the relay UE does not satisfy the RSRP-based access stratum relay selection reselection criterion, or if the relay UE does not satisfy the higher layer criterion, or the NTN cell of the Uu link of the Relay UE is an earth moving cell, the remote UE determines that the relay UE is not the selected relay UE, and the relay UE is discarded.

### Example 5:

The discovery message of a relay UE includes the cell leaving time information of the Uu link between the relay UE and the gNB. The remote UE performs relay selection according to the cell leaving time information in the discovery message as follows:
- If the relay UE satisfies the RSRP-based access stratum relay selection reselection criterion and higher layer criterion, and the remaining cell service time of the Uu link is greater than or equal to a corresponding threshold, the remote UE determines that the relay UE is the selected relay UE. The threshold can be pre-configured or provided by the gNB through a SIB/RRC message, or can be determined by the terminal according to its own terminal type and/or registered service type (similar to Example 3).

Or, the remote UE preferentially selects a relay UE with a smaller remaining cell service time of the Uu link as the selected relay UE.
- If the relay UE does not satisfy the RSRP-based access stratum relay selection reselection criterion, or if the relay UE does not satisfy the higher layer criterion, or if the remaining cell service time of the Uu link is less than the corresponding threshold, the remote UE determines that the relay UE is not the selected relay UE, that is, the relay UE is discarded.

The above has described the process of relay selection in detail, and the process of relay reselection will be described below. The difference between relay reselection and relay selection is that the remote device is currently connected to a relay device, but based on the following trigger condition(s), a better candidate relay device needs to be reselected.

The trigger condition for relay reselection will be described here. The trigger condition for relay reselection can be any one of the following five trigger modes.

Trigger condition 1: the signal quality of a third communication link between the remote device and the connected relay device is lower than a second threshold.

Different from relay selection, the remote device does not determine the signal quality of the direct communication link with the base station, but determines the signal quality of the third communication link with the connected relay device. It can be understood that if the signal quality of the third communication link is not good, it means that the currently connected relay device cannot provide good data service, and thus relay reselection may be triggered to seek better data service.

Trigger condition 2: fifth indication information is received, where the fifth indication information is used to indicate disconnection from the connected relay device.

The fifth indication information may be sent by a higher layer of the remote device, or may be sent to the remote device by the connected relay device. For example, the higher layer of the remote device sends a release message to indicate disconnection from the connected relay device. Alternatively, the connected relay device sends fifth indication information to the remote device through the third communication link to indicate disconnection. For example, when the service of the connected relay device is terminated, or when its load reaches a threshold, the remote device may be indicated to disconnect from the current link.

Trigger condition 2: a higher layer trigger of the remote device.

The higher layer of the remote device indicates to perform relay reselection when a certain condition is satisfied. For example, when the higher layer of the remote device finds that the currently connected relay device cannot satisfy the current or more service needs, or when the higher layer has started a delay-sensitive service or a service with a large amount of data, etc., and the currently connected relay device cannot support such service, the higher layer can trigger relay reselection.

Trigger condition 4: the remaining cell service time of the connected relay device reaches a target value.

When the remaining cell service time of the connected relay device reaches the target value and the cell service of the connected relay device has ended or is about to end, the remote device performs relay reselection.

The target value may be pre-configured, determined according to the type of the remote device, or determined according to the service type registered by the remote device. For example, the target value is zero, or a relatively small value. The embodiment of the present disclosure does not limit the value and determination method of the target value.

Trigger condition 5: the system time has reached the cell service stop time moment of the connected relay device.

The trigger condition 5 is similar as the trigger condition 4, the system time has reached the cell service stop time moment, the cell service of the connected relay device has ended, and the remote device may perform relay reselection.

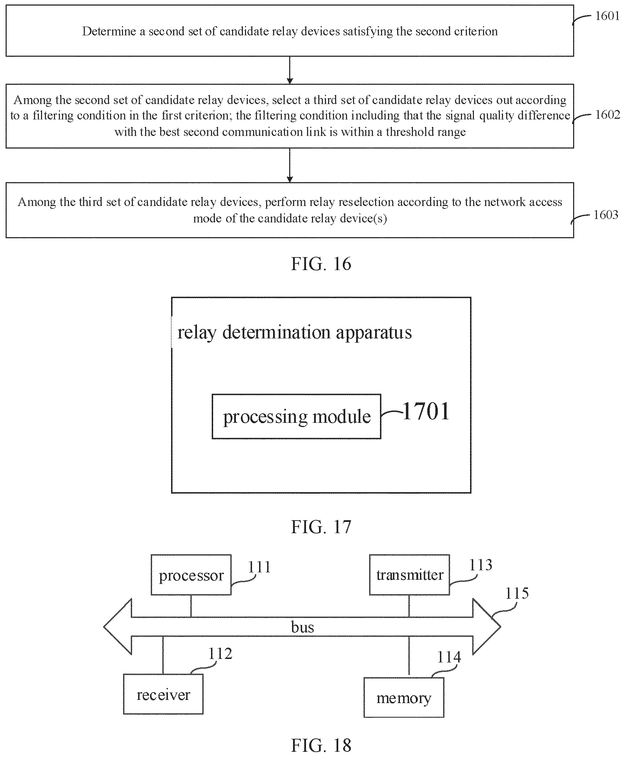

After reselection is triggered by the above trigger condition(s), the remote device may perform relay reselection according to the network access mode of at least one candidate relay device. Relay reselection according to the relay selection criterion and the network access mode of the relay device may be realized through the relay reselection method shown in FIG. 16. The method includes:
In step 1601, a second set of candidate relay devices satisfying the second criterion are determined.

In step 1602, among the second set of candidate relay devices, a third set of candidate relay devices are selected out according to a filtering condition in the first criterion. The filtering condition includes that the signal quality difference with the best second communication link is within a threshold range.

In step 1603, among the third set of candidate relay devices, relay reselection is performed according to the network access mode of the candidate relay device(s).

A preliminary filtering of candidate relay devices is performed according to the second criterion to determine the second set of candidate relay devices, and then further filtering is performed based on the first criterion to determine candidate relay devices with good second communication link signal quality as fourth set of candidate relay devices, and then relay reselection is performed according to the network access mode. Through multi-step filtering, a variety of criteria and network access modes are fully utilized, so that the final selection result can provide better cell services for the remote device.

In step 1602, the threshold range can be expressed as RangetoBestRelay. The filtering condition may be pre-configured or configured by the base station, for example, provided by the gNB through a SIB/RRC message, which is not limited in this embodiment of the present disclosure.

Through step 1602 and step 1603, the candidate relay devices that satisfy the second criterion and have relatively good second communication link signal quality are selected out, and there is no need to determine the network access mode of each candidate relay device, which can be greatly reduce the amount of calculation and improve the efficiency of relay reselection.

In step 1603, the remote device may perform relay reselection according to any of the following cases.
Case 1: among the third set of candidate relay devices, reselection of a candidate relay device whose network access mode is the terrestrial access is prioritized.
Case2: among the third set of candidate relay devices, reselection of a candidate relay device whose network access mode is the terrestrial access is prioritized, and reselection of a candidate relay device whose network access mode is the NTN access and whose cell type of the NTN cell is earth fixed cell is secondarily prioritized.
Case 3: among the fourth set of candidate relay devices, reselection of a candidate relay device with the smallest delay of the first communication link is prioritized.
Case 4: among the third set of candidate relay devices, reselection of a candidate relay device whose network access mode is the terrestrial access is prioritized, and reselection of a candidate relay device whose network access mode is the NTN access and whose remaining cell service time of the NTN cell is the largest is secondarily prioritized.
Case 5: among the third set of candidate relay devices, reselection of a candidate relay device whose network access mode is the terrestrial access is prioritized, and reselection of a candidate relay device whose network access mode is the NTN access and whose difference between the cell service stop time moment of the NTN cell and the system time is the largest is secondarily prioritized.

In the above five possible cases, taking into account the advantages of terrestrial access, when relay reselection is performed, a candidate relay device of terrestrial access is preferentially reselected, and in a case where the third set of candidate relay devices are all candidate relay devices of NTN access, secondarily prioritized reselection can be performed based on other factors. The selection reasons for these factors are the same as those for relay selection, and will not be repeated here.

In some embodiments, similar to relay selection, the relay reselection procedure may also consider the characteristic of the remote device itself. Correspondingly, the relay reselection procedure may be as follows. A second set of candidate relay devices that satisfy the second criterion are determined, and then a third set of candidate relay devices are selected out of the second set of candidate relay devices according to the filtering condition in the first criterion. The filtering condition includes that the signal quality difference with the best second communication link is within a threshold range. Finally, among the third set of candidate relay devices, reselection of a candidate relay device whose network access mode is the terrestrial access and whose second communication link signal quality is the best is prioritized.

The first two steps are the same as above. In the end, regardless of whether the terminal's own characteristic supports NTN access, considering the advantages of the terrestrial access, reselection of a candidate relay device whose network access mode is the terrestrial access and whose signal quality of the second communication link is the best is prioritized.

If the third set of candidate relay devices are all candidate relay devices of NTN access, then in a case where the characteristic of the terminal device itself supports the NTN access, reselection of a candidate relay device among the third set of candidate relay device that satisfies any one selection condition in a fourth selection condition set is secondarily prioritized.

The fourth selection condition set includes at least one of the following selection conditions:
among the candidate relay devices whose delay information of the first communication link is less than or equal to the first threshold, a candidate relay device with the best signal quality of the second communication link is reselected; the first communication link is the communication link between the candidate relay device and the base station;
a candidate relay device with smallest delay information of the first communication link is reselected;
among the candidate relay devices whose cell type of the NTN cell is the fixed earth type, a candidate relay device with the best signal quality of the second communication link is reselected;
among the candidate relay devices whose remaining cell service time of the NTN cell is greater than or equal to the second threshold, a candidate relay device with the best signal quality of the second communication link is reselected;
a candidate relay device with the largest remaining cell service time of the NTN cell is reselected;
among the candidate relay devices whose difference between the cell service stop time moment of the NTN cell and the system time is greater than or equal to the second threshold, a candidate relay device with the best signal quality of the second communication link is reselected;
a candidate relay device with the largest difference between the cell service stop time moment of the NTN cell and the system time.

When the characteristic of the remote device does not support NTN access, a candidate relay device with the best signal quality of the second communication link among the third set of candidate relay devices is reselected. For example, if the service type registered by the remote device is a delay-sensitive service, or the type of the remote device does not support NTN access, and the above conditions for prioritized reselection and secondarily prioritized reselection are not satisfied, a candidate relay device with the best second communication link signal quality may be selected, to ensure the quality of service of the cell as much as possible.

Five specific examples are provided below for the above-mentioned relay reselection procedure. In the five specific examples, the method steps in any one or more cases of the above-mentioned relay reselection are respectively applied.

In the following examples, the first indication information is called indication information indicating that the Uu link between the relay UE and the gNB is NTN access; the second indication information is called indication information indicating the NTN access type (such as GEO, LEO, etc.) of the Uu link of the relay UE; the delay information of the first communication link is called the delay information of the Uu link of the relay UE; the third indication information is called earth fixed/earth moving cell indication information; and the fourth indication information is called cell leaving time information.

### Example 6:

The discovery message of a relay UE includes the indication information indicating that the Uu link between the relay UE and the gNB is NTN access and/or the indication information indicating the NTN access type (such as GEO, LEO, etc.) of the Uu link of the relay UE and/or delay information of the Uu link the relay UE and/or earth fixed/earth moving cell indication information and/or cell leaving time information. The remote UE performs relay reselection according to the above information in the discovery message as follows:
- The remote UE confirms whether the Uu link between the relay UE and the gNB is NTN access according to the information in the discovery message. The confirmation method is: if the discovery message of a relay UE contains the above information, the remote UE considers that the Uu link between the relay UE and the gNB is NTN access.
- Among all relay UEs that satisfy the higher layer criterion, the remote UE ranks the current relay UE (the relay UE to which the remote UE has been connected) and candidate relay UEs according to the RSRP-based access stratum relay reselection criterion:
- The remote UE determines a candidate relay UE through rangeToBestRelay. The PC5 signal quality difference between the candidate relay UE and the best relay UE is within the rangeToBestCell range. The PC5 signal quality of the best relay UE refers to the maximum value of the PC5 signal quality of the above ranked relay UEs. The remote UE can preferentially select a relay UE with the best PC5 signal quality whose Uu link with the gNB is not NTN access (i.e., the Uu link is terrestrial access) among the candidate relay UEs as the target relay UE. If there is no relay UE whose Uu link with the gNB is terrestrial access among the candidate relay UEs, the remote UE selects a relay UE with the best PC5 signal quality as the target relay UE. The rangeToBestRelay can be pre-configured or provided by gNB through a SIB/RRC message.

### Example 7:

The discovery message of a relay UE includes the earth fixed/earth moving cell indication information of the Uu link between the relay UE and the gNB. The remote UE performs relay reselection according to the earth fixed/earth moving cell indication information in the discovery message as follows:
- Among all the relay UEs that satisfy the higher layer criterion, the remote UE ranks the current relay UE and candidate relay UEs according to the RSRP-based access stratum relay reselection criterion:
- The remote UE determines a candidate relay UE through rangeToBestRelay. The PC5 signal quality difference between the candidate relay UE and the best relay UE is within the rangeToBestCell range. The best PC5 signal quality of the relay UE refers to the maximum value of the PC5 signal quality of the above ranked relay UEs. The remote UE may preferentially select, among the candidate relay UEs, a relay UE with the best PC5 signal quality whose Uu link with the gNB is not the NTN access as the target relay UE. If there is no relay UE whose Uu link with the gNB is the terrestrial access among the candidate relay UEs, the remote UE preferentially selects, among relay UEs of NTN access, a relay UE with the best PC5 signal quality whose Uu link with the gNB is the earth fixed cell as the target relay UE. If there is no relay UE whose Uu link is the earth fixed cell among the relay UEs of NTN access, that is, if the Uu links of the relay UEs of NTN access are all earth moving cell, the remote UE selects a relay UE with the best PC5 signal quality as the target relay UE. The rangeToBestRelay may be pre-configured or provided by the gNB through the SIB/RRC message.

### Example 8:

The discovery message of a relay UE includes the delay information of the Uu link between the relay UE and the gNB. The remote UE performs relay reselection according to the delay information of the Uu link in the discovery message as follows:
- Among all the relay UEs that satisfy the higher layer criterion, the remote UE ranks the current relay UE and candidate relay UEs according to the RSRP-based access stratum relay reselection criterion.
- The remote UE determines a candidate relay UE through rangeToBestRelay. The PC5 signal quality difference between the candidate relay UE and the best relay UE is within the rangeToBestCell range. The best PC5 signal quality of the relay UE refers to the maximum value of the PC5 signal quality of the above ranked relay UEs. The remote UE may select a relay UE with the smallest Uu link delay as the target relay UE among the candidate relay UEs. The rangeToBestRelay can be pre-configured or provided by gNB through SIB/RRC message.

### Example 9:

The discovery message of a relay UE includes the cell leaving time information of the Uu link between the relay UE and the gNB. The remote UE performs relay reselection according to the cell leaving time information in the discovery message as follows:
- Among all the relay UEs that satisfy the higher layer criterion, the remote UE ranks the current relay UE and candidate relay UEs according to the RSRP-based access stratum relay reselection criterion.
- The remote UE determines a candidate relay UE through rangeToBestRelay. The PC5 signal quality difference between the candidate relay UE and the best relay UE is within the rangeToBestCell range. The best PC5 signal quality of the relay UE refers to the maximum value of the PC5 signal quality of the above ranked relay UEs. The remote UE may preferentially select, among the candidate relay UEs, a relay UE with the best PC5 signal quality whose Uu link with the gNB is not the NTN access as the target relay UE. If there is no relay UE whose Uu link is not NTN access among the candidate relay UEs, that is, the Uu links of the candidate relay UEs are all NTN access, then the remote UE selects, among the relay UEs of NTN access, a relay UE with the longest/largest remaining cell service time of the Uu link as the target relay UE. The rangeToBestRelay may be pre-configured or provided by the gNB through the SIB/RRC message.

Alternatively, a relay UE that is not NTN access (that is, a relay UE of terrestrial access) can also be regarded as having unlimited remaining cell service time. The remote UE does not need to distinguish whether the relay UE is the NTN access or non-NTN access, and directly ranks all relay UEs that satisfy the higher layer criterion according to the RSRP-based access stratum relay reselection criterion, and then determines a candidate relay UE through rangeToBestRelay. The signal quality difference between the candidate relay UE and the best PC5 signal quality is within the rangeToBestRelay range. The remote UE selects, among the determined candidate relay UE(s), a relay UE with the longest remaining cell service time of the Uu link as the target relay UE.

### Example 10:

The discovery message of a relay UE includes the indication information indicating that the Uu link between the relay UE and the gNB is NTN access and/or the indication information indicating the NTN access type (such as GEO, LEO, etc.) of the Uu link of the relay UE and/or delay information of the Uu link of the relay UE and/or earth fixed/earth moving cell indication information and/or cell leaving time information. The remote UE performs relay reselection according to the above information in the discovery message as follows:
- The remote UE determines whether the remote UE supports the NTN access type of the Uu link of the relay UE based on its own characteristic or capability, such as the terminal type of the UE, the service type registered by the UE, etc.
- Among all the relay UEs that satisfy the higher layer criterion, the remote UE ranks the current relay UE and candidate relay UEs according to the RSRP-based access stratum relay reselection criterion.
- The remote UE determines a candidate relay UE through rangeToBestCell. The PC5 signal quality difference between the candidate relay UE and the best relay UE is within the rangeToBestCell range. The best PC5 signal quality of the relay UE refers to the maximum value of the PC5 signal quality of the above ranked relay UEs. Among the determined candidate relay UE(s), the remote UE may preferentially select a relay UE with the best signal quality among the relay UEs supported by the remote UE's own terminal type and/or registered service type as the target relay UE. If the remote UE's own terminal type and/or registered service type do not support each candidate relay UE, the remote UE selects a relay UE with the best signal quality as the target relay UE. The rangeToBestRelay can be pre-configured or provided by gNB through SIB/RRC message.

FIG. 17 is a block diagram of a relay determination apparatus according to an exemplary embodiment of the present disclosure. The relay determination apparatus includes a processing module 1701.

The processing module 1701 is configured to perform relay selection or relay reselection according to a network access mode of at least one candidate relay device;
wherein the network access mode includes NTN access or terrestrial access.

In some embodiments, the network access mode of the at least one candidate relay device is carried in a discovery message of the at least one candidate relay device.

In some embodiments, the network access mode of the at least one candidate relay device is indicated by at least one of the following information:
first indication information, wherein the first indication information is used to indicate whether a first communication link is accessed through NTN, and the first communication link is a communication link between the at least one candidate relay device and a base station;
second indication information, wherein the second indication information is used to indicate an NTN type of the first communication link;
delay information of the first communication link;
third indication information, wherein the third indication information is used to indicate a cell type of an NTN cell of the first communication link; or
fourth indication information, wherein the fourth indication information is used to indicate remaining cell service time or cell service stop time moment of the NTN cell of the first communication link.

In some embodiments, the apparatus further includes a determination module configured to:
in a case where the discovery message of the at least one candidate relay device carries the first indication information and the first indication information is 0, determine that the network access mode of the at least one candidate relay device is the NTN access; in a case where the discovery message of the at least one candidate relay device carries the first indication information and the first indication information is 1, determine that the network access mode of the at least one candidate relay device is the terrestrial access;
or, in a case where the discovery message of the at least one candidate relay device carries the first indication information and the first indication information is 0, determine that the network access mode of the at least one candidate relay device is the terrestrial access; in a case where the discovery message of the at least one candidate relay device carries the first indication information and the first indication information is 1, determine that the network access mode of the at least one candidate relay device is the NTN access mode;
or, in a case where the discovery message of the at least one candidate relay device carries any one of the second indication information, the third indication message, or the fourth indication information, determine that the network access mode of the at least one candidate relay device is the NTN access;
or, in a case where the discovery message of the at least one candidate relay device carries the delay information of the first communication link and the delay information is greater than a first threshold, determine that the network access mode of the at least one candidate relay device is the NTN access, wherein the first communication link is a communication link between the at least one candidate relay device and the base station;
or, in a case where the discovery message of the at least one candidate relay device carries the delay information of the first communication link and the delay information is less than or equal to the first threshold, determine that the network access mode of the at least one candidate relay device is the terrestrial access;
or, in a case where the discovery message of the at least one candidate relay device does not carry any one of the first indication information, the second indication information, the delay information of the first communication link, the third indication information and the fourth indication information, determine that the network access mode of the at least one candidate relay device is the terrestrial access;
wherein the first indication information is used to indicate whether a first communication link is accessed through NTN;
the second indication information is used to indicate an NTN type of the first communication link;
the third indication information is used to indicate a cell type of an NTN cell of the first communication link;
the fourth indication information is used to indicate remaining cell service time or cell service stop time moment of the NTN cell of the first communication link.

In some embodiments, the processing module 1701 is configured to:
perform relay selection or relay reselection according to a relay selection criterion and the network access mode of the at least one candidate relay device;
wherein the relay selection criterion includes at least one of a first criterion or a second criterion, and the first criterion includes that a signal quality of a second communication link between the remote device and the candidate relay device satisfies a first condition, and the second criterion is that the candidate relay device satisfies a higher layer criterion.

In some embodiments, the processing module 1701 is configured to:
determine, among the at least one candidate relay device, one candidate relay device that satisfies the relay selection criterion; and
performing relay selection based on the network access mode of the candidate relay device.

In some embodiments, the processing module 1701 is configured to:
in a case where the network access mode of the candidate relay device is the terrestrial access, select the candidate relay device; in a case where the network access mode of the candidate relay device is the NTN access, abandon accessing the candidate relay device;
or, in a case where delay information of a first communication link of the candidate relay device is less than or equal to a first threshold, select the candidate relay device, wherein the first communication link is a communication link between the candidate relay device and a base station; in a case where the delay information of the first communication link of the candidate relay device is greater than the first threshold, abandon accessing the candidate relay device;
or, in a case where a cell type of a NTN cell of the candidate relay device is an earth fixed type, select the candidate relay device; in a case where the network access mode of the candidate relay device is an earth moving type, abandoning accessing the candidate relay device;
or, in a case where remaining cell service time of the NTN cell of the candidate relay device is greater than or equal to a second threshold, select the candidate relay device; in a case where the remaining cell service time of the NTN cell of the candidate relay device is less than the second threshold, abandon accessing the candidate relay device;
or, in a case where a difference between cell service stop time moment of the NTN cell of the candidate relay device and system time is greater than or equal to a second threshold, select the candidate relay device; in a case where the difference between the cell service stop time moment of the NTN cell of the candidate relay device and the system time is smaller than the second threshold, abandon accessing the candidate relay device.

In some embodiments, the processing module 1701 is configured to:
determine a first set of candidate relay devices satisfying the relay selection criterion; and
perform relay selection among the first set of candidate relay devices based on network access modes of the candidate relay devices.

In some embodiments, the processing module 1701 is configured to:
among the first set of candidate relay devices, prioritize selection of a candidate relay device whose network access mode is the terrestrial access;
or, among the first set of candidate relay devices, prioritize selection of a candidate relay device whose delay information of a first communication link is less than or equal to a first threshold, wherein the first communication link is a communication link between the candidate relay device and a base station;
or, among the first set of candidate relay devices, prioritize selection of a candidate relay device with the smallest delay information of the first communication link;
or, among the first set of candidate relay devices, firstly prioritize selection of a relay device whose network access mode is terrestrial access, and secondarily prioritize selection of a candidate relay device whose network access mode is the NTN access and whose cell type of a NTN cell is an earth fixed type;
or, among the first set of candidate relay devices, firstly prioritize selection of a relay device whose network access mode is the terrestrial access, and secondarily prioritize selection of a candidate relay device whose network access mode is the NTN access and whose remaining cell service time of a NTN cell is greater than or equal to the second threshold;
or, among the first set of candidate relay devices, firstly prioritize selection of a relay device whose network access mode is the terrestrial access, and secondarily prioritize selection of a candidate relay device whose network access mode is the NTN access and which has the largest remaining cell service time of a NTN cell;
or, among the first set of candidate relay devices, firstly prioritize selection of a relay device whose network access mode is the terrestrial access, and secondarily prioritize selection of a candidate relay device whose network access mode is the NTN access and for which a difference between cell service stop time moment of the NTN cell and system time is greater than or equal to the second threshold;
or, among the first set of candidate relay devices, firstly prioritize selection of a relay device whose network access mode is the terrestrial access, and secondarily prioritize selection of a candidate relay device whose network access mode is the NTN access and which has the largest difference between cell service stop time moment of the NTN cell and system time.

In some embodiments, at least one of the first threshold and the second threshold is:
preconfigured;
or, configured by the base station;
or, determined according to a type of the remote device;
or, determined according to a service type registered by the remote device.
In some embodiments, the processing module 1701 is configured to:
determine, among the at least one candidate relay device, one candidate relay device satisfying the relay selection criterion; and
perform relay selection based on a characteristic of the remote device itself and the network access mode of the candidate relay device;
wherein the characteristic of the remote device itself includes at least one of: a type of the remote device and a registered service type.

In some embodiments, the processing module 1701 is configured to:
select the candidate relay device in a case where the network access mode of the candidate relay device is the terrestrial access;
or, in a case where the network access mode of the candidate relay device is the NTN access, and the characteristic of the remote device itself supports the NTN access, select the candidate relay device.

In some embodiments, the processing module 1701 is configured to:
determine a first set of candidate relay devices satisfying the relay selection criterion;
perform relay selection among the first set of candidate relay devices based on a characteristic of the remote device itself and network access modes of the candidate relay devices;
wherein the characteristic of the remote device itself includes at least one of: a type of the remote device and a registered service type.

In some embodiments, the processing module 1701 is configured to:
among the first set of candidate relay devices, prioritize selection of a candidate relay device whose network access mode is the terrestrial access; in a case where the characteristic of the remote device itself supports the NTN access, secondarily prioritize selection of a candidate relay device that satisfies any one of selection conditions in a first selection condition set;
wherein the first selection condition set includes at least one of the following selection conditions that:
delay information of a first communication link is less than or equal to a first threshold, wherein the first communication link is a communication link between the candidate relay device and a base station;
delay information of the first communication link is the smallest;
a cell type of a NTN cell is an earth fixed type;
remaining cell service time of the NTN cell is greater than or equal to a second threshold;
the remaining cell service time of the NTN cell is the largest;
a difference between the cell service stop time moment of the NTN cell and system time is greater than or equal to the second threshold; or
the candidate relay device has the largest difference between the cell service stop time moment of the NTN cell and the system time.

In some embodiments, the processing module 1701 is configured to:
determine a second set of candidate relay devices satisfying the second criterion;
select a third set of candidate relay devices out of the second set of candidate relay devices according to a filtering condition in the first criterion, and the filtering condition includes that a signal quality difference with the best second communication link is within a threshold range; and
perform relay reselection among the third set of candidate relay devices according to network access modes of the candidate relay devices.

In some embodiments, the processing module 1701 is configured to:
among the third set of candidate relay devices, prioritize reselection of a candidate relay device whose network access mode is terrestrial access;
or, among the third set of candidate relay devices, firstly prioritize reselection of a candidate relay device whose network access mode is the terrestrial access, and secondarily prioritize reselection of a candidate relay device whose network access mode is the NTN access and whose cell type of a NTN cell is an earth fixed cell;
or, among the third set of candidate relay devices, prioritize reselection of a candidate relay device with the smallest delay of the first communication link;
or, among the third set of candidate relay devices, firstly prioritize reselection of a candidate relay device whose network access mode is the terrestrial access, and secondarily prioritize reselection of a candidate relay device whose network access mode is the NTN access and which has the largest remaining cell service time of the NTN cell;
or, among the third set of candidate relay devices, firstly prioritize reselection of a candidate relay device whose network access mode is the terrestrial access, and secondarily prioritize reselection of a candidate relay device whose network access mode is the NTN access and for which a difference between cell service stop time moment of the NTN cell and system time is the largest.

In some embodiments, the processing module 1701 is configured to:
determine a second set of candidate relay devices satisfying the second criterion;
select a third set of candidate relay devices out of the second set of candidate relay devices according to a filtering condition in the first criterion, wherein the filtering condition includes that a signal quality difference with the best second communication link is within a threshold range; and
among the third set of candidate relay devices, prioritize reselection of a candidate relay device whose network access mode is the terrestrial access and whose signal quality of the second communication link is the best.

In some embodiments, the processing module 1701 is further configured to:
in a case where a characteristic of the terminal device itself supports the NTN access, secondarily prioritize reselection of a candidate relay device among the third set of candidate relay devices that satisfies any one selection condition in a second selection condition set;
in a case where the characteristic of the remote device itself does not support the NTN access, reselect a candidate relay device with the best signal quality of the second communication link among the third set of candidate relay devices;
wherein the characteristic of the remote device itself includes at least one of: a terminal type and a registered service type;
wherein the second selection condition set includes at least one of the following selection conditions:
among candidate relay devices whose delay information of the first communication link is less than or equal to the first threshold, selecting a candidate relay device whose signal quality of the second communication link is the best, wherein the first communication link is a communication link between the candidate relay device and the base station;
selecting a candidate relay device whose delay information of the first communication link is the smallest;
among candidate relay devices whose cell type of the NTN cell is the earth fixed type, selecting a candidate relay device whose signal quality of the second communication link is the best;
among candidate relay devices whose remaining cell service time of the NTN cell is greater than or equal to a second threshold, selecting a candidate relay device whose signal quality of the second communication link is the beset;
selecting a candidate relay device whose remaining cell service time of the NTN cell is the largest;
among candidate relay devices whose difference between cell service stop time moment of the NTN cell and system time is greater than or equal to the second threshold, selecting a candidate relay device whose signal quality of the second communication link is the best; or
selecting a candidate relay device with the largest difference between the cell service stop time moment of the NTN cell and the system time.

In some embodiments, the filtering condition is:
preconfigured;
or, configured by the base station.

In some embodiments, a trigger condition for the relay selection is:
a signal quality of a direct communication link of the remote device being lower than a first threshold;
or, a higher layer trigger of the remote device.

In some embodiments, a trigger condition for the relay reselection is:
a signal quality of a third communication link between the remote device and a connected relay device being lower than a second threshold;
or, receiving fifth indication information, wherein the fifth indication information is used to indicate disconnection from the connected relay device;
or, a higher layer trigger of the remote device;
or, remaining cell service time of the connected relay device reaching a target value;
or, system time having reached cell service stop time moment of the connected relay device.

FIG. 18 is a schematic structural diagram of a remote device according to an exemplary embodiment of the present disclosure. The remote device includes: a processor 111, a receiver 112, a transmitter 113, a memory 114 and a bus 115.

The processor 111 includes one or more processing cores, and the processor 111 executes various functional applications and information processing by running software programs and modules.

The receiver 112 and the transmitter 113 may be implemented as a communication component, which may be a communication chip.

The memory 114 is connected to the processor 111 through the bus 115.

The memory 114 may be used to store at least one instruction, and the processor 111 is used to execute the at least one instruction, so as to implement various steps in the foregoing method embodiments.

In addition, the memory 114 can be implemented by any type of volatile or non-volatile storage device or their combination. The volatile or non-volatile storage device includes but not limited to: magnetic disk or optical disk, Electrically Erasable Programmable Read Only Memory (EEPROM), Erasable Programmable Read Only Memory (EPROM), Static Random-Access Memory (SRAM), Read Only Memory (ROM), magnetic memory, flash memory, Programmable Read Only Memory (PROM).

In an exemplary embodiment, there is also provided a computer-readable storage medium having at least one instruction stored therein. For example, the memory includes instructions, and the instructions can be executed by a processor to implement the above relay determining methods. For example, the computer-readable storage medium may be ROM, Random-Access Memory (RAM), Compact Disc Read Only Memory (CD-ROM), magnetic tape, floppy disk, or optical data storage device, etc.. Optionally, the computer-readable storage medium is a non-transitory computer-readable storage medium.

It should be understood that the "multiple" mentioned herein refers to two or more than two. The expression "and/or" describes an association relationship of associated objects, indicating that there may be three types of relationships. For example, A and/or B may indicate: A alone, B alone, and A and B together. The character "/" generally indicates that the contextual objects before and after the character are in an "or" relationship.

Other embodiments of the present application will be readily apparent to those skilled in the art from consideration of the specification and practice of the invention disclosed herein. The present disclosure is intended to cover any modification, use or adaptation of the present disclosure, and these modifications, uses or adaptations follow the general principles of the present disclosure and include common knowledge or conventional technical means in the technical field which are not disclosed in the present disclosure. The specification and embodiments are to be considered exemplary only, with a true scope and spirit of the present disclosure indicated by the following claims.

It should be understood that the present disclosure is not limited to the precise constructions which have been described above and shown in the accompanying drawings, and various modifications and changes may be made without departing from the scope of the present disclosure. The scope of the present disclosure is limited only by the appended claims.

## Claims

1. A relay determination method, wherein the method is performed by a remote device, and the method comprises:
performing relay selection or relay reselection according to a network access mode of at least one candidate relay device;
wherein the network access mode comprises Non-Terrestrial Network (NTN) access or terrestrial access.

2. The method according to claim 1, wherein the network access mode of the at least one candidate relay device is carried in a discovery message of the at least one candidate relay device.

3. The method according to claim 1 or 2, wherein the network access mode of the at least one candidate relay device is indicated by at least one of the following information:
first indication information, wherein the first indication information is used to indicate whether a first communication link is accessed through NTN, and the first communication link is a communication link between the at least one candidate relay device and a base station;
second indication information, wherein the second indication information is used to indicate an NTN type of the first communication link;
delay information of the first communication link;
third indication information, wherein the third indication information is used to indicate a cell type of an NTN cell of the first communication link; or
fourth indication information, wherein the fourth indication information is used to indicate remaining cell service time or cell service stop time moment of the NTN cell of the first communication link.

4. The method according to claim 3, further comprising:
in a case where the discovery message of the at least one candidate relay device carries the first indication information and the first indication information is 0, determining that the network access mode of the at least one candidate relay device is the NTN access; in a case where the discovery message of the at least one candidate relay device carries the first indication information and the first indication information is 1, determining that the network access mode of the at least one candidate relay device is the terrestrial access;
or, in a case where the discovery message of the at least one candidate relay device carries the first indication information and the first indication information is 0, determining that the network access mode of the at least one candidate relay device is the terrestrial access; in a case where the discovery message of the at least one candidate relay device carries the first indication information and the first indication information is 1, determining that the network access mode of the at least one candidate relay device is the NTN access mode;
or, in a case where the discovery message of the at least one candidate relay device carries any one of the second indication information, the third indication message, or the fourth indication information, determining that the network access mode of the at least one candidate relay device is the NTN access;
or, in a case where the discovery message of the at least one candidate relay device carries the delay information of the first communication link and the delay information is greater than a first threshold, determining that the network access mode of the at least one candidate relay device is the NTN access, wherein the first communication link is a communication link between the at least one candidate relay device and the base station;
or, in a case where the discovery message of the at least one candidate relay device carries the delay information of the first communication link and the delay information is less than or equal to the first threshold, determining that the network access mode of the at least one candidate relay device is the terrestrial access;
or, in a case where the discovery message of the at least one candidate relay device does not carry any one of the first indication information, the second indication information, the delay information of the first communication link, the third indication information and the fourth indication information, determining that the network access mode of the at least one candidate relay device is the terrestrial access.

5. The method according to any one of claims 1 to 4, wherein performing relay selection or relay reselection according to the network access mode of the at least one candidate relay device comprises:
performing relay selection or relay reselection according to a relay selection criterion and the network access mode of the at least one candidate relay device;
wherein the relay selection criterion comprises at least one of a first criterion or a second criterion, and the first criterion comprises that a signal quality of a second communication link between the remote device and the candidate relay device satisfies a first condition, and the second criterion is that the candidate relay device satisfies a higher layer criterion.

6. The method according to claim 5, wherein performing relay selection according to the relay selection criterion and the network access mode of the candidate relay device comprises:
determining, among the at least one candidate relay device, one candidate relay device that satisfies the relay selection criterion; and
performing relay selection based on the network access mode of the candidate relay device.

7. The method according to claim 6, wherein performing relay selection based on the network access mode of the candidate relay device comprises:
in a case where the network access mode of the candidate relay device is the terrestrial access, selecting the candidate relay device; in a case where the network access mode of the candidate relay device is the NTN access, abandoning accessing the candidate relay device;
or, in a case where delay information of a first communication link of the candidate relay device is less than or equal to a first threshold, selecting the candidate relay device, wherein the first communication link is a communication link between the candidate relay device and a base station; in a case where the delay information of the first communication link of the candidate relay device is greater than the first threshold, abandoning accessing the candidate relay device;
or, in a case where a cell type of a NTN cell of the candidate relay device is an earth fixed type, selecting the candidate relay device; in a case where the network access mode of the candidate relay device is an earth moving type, abandoning accessing the candidate relay device;
or, in a case where remaining cell service time of the NTN cell of the candidate relay device is greater than or equal to a second threshold, selecting the candidate relay device; in a case where the remaining cell service time of the NTN cell of the candidate relay device is less than the second threshold, abandoning accessing the candidate relay device;
or, in a case where a difference between cell service stop time moment of the NTN cell of the candidate relay device and system time is greater than or equal to a second threshold, selecting the candidate relay device; in a case where the difference between the cell service stop time moment of the NTN cell of the candidate relay device and the system time is smaller than the second threshold, abandoning accessing the candidate relay device.

8. The method according to claim 5, wherein performing relay selection according to the relay selection criterion and the network access mode of the candidate relay device comprises:
determining a first set of candidate relay devices satisfying the relay selection criterion; and
performing relay selection among the first set of candidate relay devices based on network access modes of the candidate relay devices.

9. The method according to claim 6, wherein performing relay selection among the first set of candidate relay devices based on network access modes of the candidate relay devices comprises:
among the first set of candidate relay devices, prioritizing selection of a candidate relay device whose network access mode is the terrestrial access;
or, among the first set of candidate relay devices, prioritizing selection of a candidate relay device whose delay information of a first communication link is less than or equal to a first threshold, wherein the first communication link is a communication link between the candidate relay device and a base station;
or, among the first set of candidate relay devices, prioritizing selection of a candidate relay device with the smallest delay information of the first communication link;
or, among the first set of candidate relay devices, firstly prioritizing selection of a relay device whose network access mode is terrestrial access, and secondarily prioritizing selection of a candidate relay device whose network access mode is the NTN access and whose cell type of a NTN cell is an earth fixed type;
or, among the first set of candidate relay devices, firstly prioritizing selection of a relay device whose network access mode is the terrestrial access, and secondarily prioritizing selection of a candidate relay device whose network access mode is the NTN access and whose remaining cell service time of a NTN cell is greater than or equal to the second threshold;
or, among the first set of candidate relay devices, firstly prioritizing selection of a relay device whose network access mode is the terrestrial access, and secondarily prioritizing selection of a candidate relay device whose network access mode is the NTN access and which has the largest remaining cell service time of a NTN cell;
or, among the first set of candidate relay devices, firstly prioritizing selection of a relay device whose network access mode is the terrestrial access, and secondarily prioritizing selection of a candidate relay device whose network access mode is the NTN access and for which a difference between cell service stop time moment of the NTN cell and system time is greater than or equal to the second threshold;
or, among the first set of candidate relay devices, firstly prioritizing selection of a relay device whose network access mode is the terrestrial access, and secondarily prioritizing selection of a candidate relay device whose network access mode is the NTN access and which has the largest difference between cell service stop time moment of the NTN cell and system time.

10. The method according to any one of claims 4, 7, and 9, wherein at least one of the first threshold and the second threshold is:
preconfigured;
or, configured by the base station;
or, determined according to a type of the remote device;
or, determined according to a service type registered by the remote device.

11. The method according to claim 5, wherein performing relay selection according to the relay selection criterion and the network access mode of the at least one candidate relay device comprises:
determining, among the at least one candidate relay device, one candidate relay device satisfying the relay selection criterion; and
performing relay selection based on a characteristic of the remote device itself and the network access mode of the candidate relay device;
wherein the characteristic of the remote device itself comprises at least one of: a type of the remote device and a registered service type.

12. The method according to claim 11, wherein performing relay selection based on the characteristic of the remote device itself and the network access mode of the candidate relay device comprises:
selecting the candidate relay device in a case where the network access mode of the candidate relay device is the terrestrial access;
or, in a case where the network access mode of the candidate relay device is the NTN access, and the characteristic of the remote device itself supports the NTN access, selecting the candidate relay device.

13. The method according to claim 5, wherein performing relay selection according to the relay selection criterion and the network access mode of the at least one candidate relay device comprises:
determining a first set of candidate relay devices satisfying the relay selection criterion;
performing relay selection among the first set of candidate relay devices based on a characteristic of the remote device itself and network access modes of the candidate relay devices;
wherein the characteristic of the remote device itself comprises at least one of: a type of the remote device and a registered service type.

14. The method according to claim 13, wherein performing relay selection among the first set of candidate relay devices based on the characteristic of the remote device itself and the network access modes of the candidate relay devices comprises:
among the first set of candidate relay devices, prioritizing selection of a candidate relay device whose network access mode is the terrestrial access; in a case where the characteristic of the remote device itself supports the NTN access, secondarily prioritizing selection of a candidate relay device that satisfies any one of selection conditions in a first selection condition set;
wherein the first selection condition set comprises at least one of the following selection conditions that:
delay information of a first communication link is less than or equal to a first threshold, wherein the first communication link is a communication link between the candidate relay device and a base station;
delay information of the first communication link is the smallest;
a cell type of a NTN cell is an earth fixed type;
remaining cell service time of the NTN cell is greater than or equal to a second threshold;
the remaining cell service time of the NTN cell is the largest;
a difference between the cell service stop time moment of the NTN cell and system time is greater than or equal to the second threshold; or
the candidate relay device has the largest difference between the cell service stop time moment of the NTN cell and the system time.

15. The method according to claim 5, wherein performing relay reselection according to the relay selection criterion and the network access mode of the at least one candidate relay device comprises:
determining a second set of candidate relay devices satisfying the second criterion;
selecting a third set of candidate relay devices out of the second set of candidate relay devices according to a filtering condition in the first criterion, and the filtering condition comprises that a signal quality difference with the best second communication link is within a threshold range; and
performing relay reselection among the third set of candidate relay devices according to network access modes of the candidate relay devices.

16. The method according to claim 15, wherein performing relay reselection among the third set of candidate relay devices according to the network access modes of the candidate relay devices comprises:
among the third set of candidate relay devices, prioritizing reselection of a candidate relay device whose network access mode is terrestrial access;
or, among the third set of candidate relay devices, firstly prioritizing reselection of a candidate relay device whose network access mode is the terrestrial access, and secondarily prioritizing reselection of a candidate relay device whose network access mode is the NTN access and whose cell type of a NTN cell is an earth fixed cell;
or, among the third set of candidate relay devices, prioritizing reselection of a candidate relay device with the smallest delay of the first communication link;
or, among the third set of candidate relay devices, firstly prioritizing reselection of a candidate relay device whose network access mode is the terrestrial access, and secondarily prioritizing reselection of a candidate relay device whose network access mode is the NTN access and which has the largest remaining cell service time of the NTN cell;
or, among the third set of candidate relay devices, firstly prioritizing reselection of a candidate relay device whose network access mode is the terrestrial access, and secondarily prioritizing reselection of a candidate relay device whose network access mode is the NTN access and for which a difference between cell service stop time moment of the NTN cell and system time is the largest.

17. The method according to claim 5, wherein the performing relay reselection according to the relay selection criterion and the network access mode of the at least one candidate relay device comprises:
determining a second set of candidate relay devices satisfying the second criterion;
selecting a third set of candidate relay devices out of the second set of candidate relay devices according to a filtering condition in the first criterion, wherein the filtering condition comprises that a signal quality difference with the best second communication link is within a threshold range; and
among the third set of candidate relay devices, prioritizing reselection of a candidate relay device whose network access mode is the terrestrial access and whose signal quality of the second communication link is the best.

18. The method according to claim 17, further comprising:
in a case where a characteristic of the terminal device itself supports the NTN access, secondarily prioritizing reselection of a candidate relay device among the third set of candidate relay devices that satisfies any one selection condition in a second selection condition set;
in a case where the characteristic of the remote device itself does not support the NTN access, reselecting a candidate relay device with the best signal quality of the second communication link among the third set of candidate relay devices;
wherein the characteristic of the remote device itself comprises at least one of: a terminal type and a registered service type;
wherein the second selection condition set comprises at least one of the following selection conditions:
among candidate relay devices whose delay information of the first communication link is less than or equal to the first threshold, selecting a candidate relay device whose signal quality of the second communication link is the best, wherein the first communication link is a communication link between the candidate relay device and the base station;
selecting a candidate relay device whose delay information of the first communication link is the smallest;
among candidate relay devices whose cell type of the NTN cell is the earth fixed type, selecting a candidate relay device whose signal quality of the second communication link is the best;
among candidate relay devices whose remaining cell service time of the NTN cell is greater than or equal to a second threshold, selecting a candidate relay device whose signal quality of the second communication link is the beset;
selecting a candidate relay device whose remaining cell service time of the NTN cell is the largest;
among candidate relay devices whose difference between cell service stop time moment of the NTN cell and system time is greater than or equal to the second threshold, selecting a candidate relay device whose signal quality of the second communication link is the best; or
selecting a candidate relay device with the largest difference between the cell service stop time moment of the NTN cell and the system time.

19. The method according to claim 15 or 17, wherein the filtering condition is:
preconfigured;
or, configured by the base station.

20. The method according to any one of claims 6 to 14, wherein a trigger condition for the relay selection is:
a signal quality of a direct communication link of the remote device being lower than a first threshold;
or, a higher layer trigger of the remote device.

21. The method according to any one of claims 15 to 19, wherein a trigger condition for the relay reselection is:
a signal quality of a third communication link between the remote device and a connected relay device being lower than a second threshold;
or, receiving fifth indication information, wherein the fifth indication information is used to indicate disconnection from the connected relay device;
or, a higher layer trigger of the remote device;
or, remaining cell service time of the connected relay device reaching a target value;
or, system time having reached cell service stop time moment of the connected relay device.

22. A relay determination apparatus, comprising:
a processing module configured to perform relay selection or relay reselection according to a network access mode of at least one candidate relay device;
wherein the network access mode comprises Non-Terrestrial Network (NTN) access or terrestrial access.

23. The apparatus according to claim 22, wherein the network access mode of the at least one candidate relay device is carried in a discovery message of the at least one candidate relay device.

24. The apparatus according to claim 22 or 23, wherein the network access mode of the at least one candidate relay device is indicated by at least one of the following information:
first indication information, wherein the first indication information is used to indicate whether a first communication link is accessed through NTN, and the first communication link is a communication link between the at least one candidate relay device and a base station;
second indication information, wherein the second indication information is used to indicate an NTN type of the first communication link;
delay information of the first communication link;
third indication information, wherein the third indication information is used to indicate a cell type of an NTN cell of the first communication link; or
fourth indication information, wherein the fourth indication information is used to indicate remaining cell service time or cell service stop time moment of the NTN cell of the first communication link.

25. The apparatus according to claim 24, further comprising a determination module configured to:
in a case where the discovery message of the at least one candidate relay device carries the first indication information and the first indication information is 0, determine that the network access mode of the at least one candidate relay device is the NTN access; in a case where the discovery message of the at least one candidate relay device carries the first indication information and the first indication information is 1, determine that the network access mode of the at least one candidate relay device is the terrestrial access;
or, in a case where the discovery message of the at least one candidate relay device carries the first indication information and the first indication information is 0, determine that the network access mode of the at least one candidate relay device is the terrestrial access; in a case where the discovery message of the at least one candidate relay device carries the first indication information and the first indication information is 1, determine that the network access mode of the at least one candidate relay device is the NTN access mode;
or, in a case where the discovery message of the at least one candidate relay device carries any one of the second indication information, the third indication message, or the fourth indication information, determine that the network access mode of the at least one candidate relay device is the NTN access;
or, in a case where the discovery message of the at least one candidate relay device carries the delay information of the first communication link and the delay information is greater than a first threshold, determine that the network access mode of the at least one candidate relay device is the NTN access, wherein the first communication link is a communication link between the at least one candidate relay device and the base station;
or, in a case where the discovery message of the at least one candidate relay device carries the delay information of the first communication link and the delay information is less than or equal to the first threshold, determine that the network access mode of the at least one candidate relay device is the terrestrial access;
or, in a case where the discovery message of the at least one candidate relay device does not carry any one of the first indication information, the second indication information, the delay information of the first communication link, the third indication information and the fourth indication information, determine that the network access mode of the at least one candidate relay device is the terrestrial access.

26. The apparatus according to any one of claims 22 to 25, wherein the processing module is configured to:
perform relay selection or relay reselection according to a relay selection criterion and the network access mode of the at least one candidate relay device;
wherein the relay selection criterion comprises at least one of a first criterion or a second criterion, and the first criterion comprises that a signal quality of a second communication link between the remote device and the candidate relay device satisfies a first condition, and the second criterion is that the candidate relay device satisfies a higher layer criterion.

27. The apparatus according to claim 26, wherein the processing module is configured to:
determine, among the at least one candidate relay device, one candidate relay device that satisfies the relay selection criterion; and
performing relay selection based on the network access mode of the candidate relay device.

28. The apparatus according to claim 27, wherein the processing module is configured to:
in a case where the network access mode of the candidate relay device is the terrestrial access, select the candidate relay device; in a case where the network access mode of the candidate relay device is the NTN access, abandon accessing the candidate relay device;
or, in a case where delay information of a first communication link of the candidate relay device is less than or equal to a first threshold, select the candidate relay device, wherein the first communication link is a communication link between the candidate relay device and a base station; in a case where the delay information of the first communication link of the candidate relay device is greater than the first threshold, abandon accessing the candidate relay device;
or, in a case where a cell type of a NTN cell of the candidate relay device is an earth fixed type, select the candidate relay device; in a case where the network access mode of the candidate relay device is an earth moving type, abandoning accessing the candidate relay device;
or, in a case where remaining cell service time of the NTN cell of the candidate relay device is greater than or equal to a second threshold, select the candidate relay device; in a case where the remaining cell service time of the NTN cell of the candidate relay device is less than the second threshold, abandon accessing the candidate relay device;
or, in a case where a difference between cell service stop time moment of the NTN cell of the candidate relay device and system time is greater than or equal to a second threshold, select the candidate relay device; in a case where the difference between the cell service stop time moment of the NTN cell of the candidate relay device and the system time is smaller than the second threshold, abandon accessing the candidate relay device.

29. The apparatus according to claim 26, wherein the processing module is configured to:
determine a first set of candidate relay devices satisfying the relay selection criterion; and
perform relay selection among the first set of candidate relay devices based on network access modes of the candidate relay devices.

30. The apparatus according to claim 29, wherein the processing module is configured to:
among the first set of candidate relay devices, prioritize selection of a candidate relay device whose network access mode is the terrestrial access;
or, among the first set of candidate relay devices, prioritize selection of a candidate relay device whose delay information of a first communication link is less than or equal to a first threshold, wherein the first communication link is a communication link between the candidate relay device and a base station;
or, among the first set of candidate relay devices, prioritize selection of a candidate relay device with the smallest delay information of the first communication link;
or, among the first set of candidate relay devices, firstly prioritize selection of a relay device whose network access mode is terrestrial access, and secondarily prioritize selection of a candidate relay device whose network access mode is the NTN access and whose cell type of a NTN cell is an earth fixed type;
or, among the first set of candidate relay devices, firstly prioritize selection of a relay device whose network access mode is the terrestrial access, and secondarily prioritize selection of a candidate relay device whose network access mode is the NTN access and whose remaining cell service time of a NTN cell is greater than or equal to the second threshold;
or, among the first set of candidate relay devices, firstly prioritize selection of a relay device whose network access mode is the terrestrial access, and secondarily prioritize selection of a candidate relay device whose network access mode is the NTN access and which has the largest remaining cell service time of a NTN cell;
or, among the first set of candidate relay devices, firstly prioritize selection of a relay device whose network access mode is the terrestrial access, and secondarily prioritize selection of a candidate relay device whose network access mode is the NTN access and for which a difference between cell service stop time moment of the NTN cell and system time is greater than or equal to the second threshold;
or, among the first set of candidate relay devices, firstly prioritize selection of a relay device whose network access mode is the terrestrial access, and secondarily prioritize selection of a candidate relay device whose network access mode is the NTN access and which has the largest difference between cell service stop time moment of the NTN cell and system time.

31. The apparatus according to any one of claims 25, 28, and 30, wherein at least one of the first threshold and the second threshold is:
preconfigured;
or, configured by the base station;
or, determined according to a type of the remote device;
or, determined according to a service type registered by the remote device.

32. The apparatus according to claim 26, wherein the processing module is configured to:
determine, among the at least one candidate relay device, one candidate relay device satisfying the relay selection criterion; and
perform relay selection based on a characteristic of the remote device itself and the network access mode of the candidate relay device;
wherein the characteristic of the remote device itself comprises at least one of: a type of the remote device and a registered service type.

33. The apparatus according to claim 32, wherein the processing module is configured to:
select the candidate relay device in a case where the network access mode of the candidate relay device is the terrestrial access;
or, in a case where the network access mode of the candidate relay device is the NTN access, and the characteristic of the remote device itself supports the NTN access, select the candidate relay device.

34. The apparatus according to claim 26, wherein the processing module is configured to:
determine a first set of candidate relay devices satisfying the relay selection criterion;
perform relay selection among the first set of candidate relay devices based on a characteristic of the remote device itself and network access modes of the candidate relay devices;
wherein the characteristic of the remote device itself comprises at least one of: a type of the remote device and a registered service type.

35. The apparatus according to claim 34, wherein the processing module is configured to:
among the first set of candidate relay devices, prioritize selection of a candidate relay device whose network access mode is the terrestrial access; in a case where the characteristic of the remote device itself supports the NTN access, secondarily prioritize selection of a candidate relay device that satisfies any one of selection conditions in a first selection condition set;
wherein the first selection condition set comprises at least one of the following selection conditions that:
delay information of a first communication link is less than or equal to a first threshold, wherein the first communication link is a communication link between the candidate relay device and a base station;
delay information of the first communication link is the smallest;
a cell type of a NTN cell is an earth fixed type;
remaining cell service time of the NTN cell is greater than or equal to a second threshold;
the remaining cell service time of the NTN cell is the largest;
a difference between the cell service stop time moment of the NTN cell and system time is greater than or equal to the second threshold; or
the candidate relay device has the largest difference between the cell service stop time moment of the NTN cell and the system time.

36. The apparatus according to claim 26, wherein the processing module is configured to:
determine a second set of candidate relay devices satisfying the second criterion;
select a third set of candidate relay devices out of the second set of candidate relay devices according to a filtering condition in the first criterion, and the filtering condition comprises that a signal quality difference with the best second communication link is within a threshold range; and
perform relay reselection among the third set of candidate relay devices according to network access modes of the candidate relay devices.

37. The apparatus according to claim 36, wherein the processing module is configured to:
among the third set of candidate relay devices, prioritize reselection of a candidate relay device whose network access mode is terrestrial access;
or, among the third set of candidate relay devices, firstly prioritize reselection of a candidate relay device whose network access mode is the terrestrial access, and secondarily prioritize reselection of a candidate relay device whose network access mode is the NTN access and whose cell type of a NTN cell is an earth fixed cell;
or, among the third set of candidate relay devices, prioritize reselection of a candidate relay device with the smallest delay of the first communication link;
or, among the third set of candidate relay devices, firstly prioritize reselection of a candidate relay device whose network access mode is the terrestrial access, and secondarily prioritize reselection of a candidate relay device whose network access mode is the NTN access and which has the largest remaining cell service time of the NTN cell;
or, among the third set of candidate relay devices, firstly prioritize reselection of a candidate relay device whose network access mode is the terrestrial access, and secondarily prioritize reselection of a candidate relay device whose network access mode is the NTN access and for which a difference between cell service stop time moment of the NTN cell and system time is the largest.

38. The apparatus according to claim 26, wherein the processing module is configured to:
determine a second set of candidate relay devices satisfying the second criterion;
select a third set of candidate relay devices out of the second set of candidate relay devices according to a filtering condition in the first criterion, wherein the filtering condition comprises that a signal quality difference with the best second communication link is within a threshold range; and
among the third set of candidate relay devices, prioritize reselection of a candidate relay device whose network access mode is the terrestrial access and whose signal quality of the second communication link is the best.

39. The apparatus according to claim 38, wherein the processing module is further configured to:
in a case where a characteristic of the terminal device itself supports the NTN access, secondarily prioritize reselection of a candidate relay device among the third set of candidate relay devices that satisfies any one selection condition in a second selection condition set;
in a case where the characteristic of the remote device itself does not support the NTN access, reselect a candidate relay device with the best signal quality of the second communication link among the third set of candidate relay devices;
wherein the characteristic of the remote device itself comprises at least one of: a terminal type and a registered service type;
wherein the second selection condition set comprises at least one of the following selection conditions:
among candidate relay devices whose delay information of the first communication link is less than or equal to the first threshold, selecting a candidate relay device whose signal quality of the second communication link is the best, wherein the first communication link is a communication link between the candidate relay device and the base station;
selecting a candidate relay device whose delay information of the first communication link is the smallest;
among candidate relay devices whose cell type of the NTN cell is the earth fixed type, selecting a candidate relay device whose signal quality of the second communication link is the best;
among candidate relay devices whose remaining cell service time of the NTN cell is greater than or equal to a second threshold, selecting a candidate relay device whose signal quality of the second communication link is the beset;
selecting a candidate relay device whose remaining cell service time of the NTN cell is the largest;
among candidate relay devices whose difference between cell service stop time moment of the NTN cell and system time is greater than or equal to the second threshold, selecting a candidate relay device whose signal quality of the second communication link is the best; or
selecting a candidate relay device with the largest difference between the cell service stop time moment of the NTN cell and the system time.

40. The apparatus according to claim 36 or 38, wherein the filtering condition is:
preconfigured;
or, configured by the base station.

41. The apparatus according to any one of claims 37 to 35, wherein a trigger condition for the relay selection is:
a signal quality of a direct communication link of the remote device being lower than a first threshold;
or, a higher layer trigger of the remote device.

42. The apparatus according to any one of claims 36 to 40, wherein a trigger condition for the relay reselection is:
a signal quality of a third communication link between the remote device and a connected relay device being lower than a second threshold;
or, receiving fifth indication information, wherein the fifth indication information is used to indicate disconnection from the connected relay device;
or, a higher layer trigger of the remote device;
or, remaining cell service time of the connected relay device reaching a target value;
or, system time having reached cell service stop time moment of the connected relay device.

43. A remote device, comprising:
one or more processors;
one or more transceivers coupled to the one or more processors;
wherein the one or more processors are configured to load and execute executable instructions to implement the relay determination method according to any one of claims 1 to 21.

44. A computer-readable storage medium, wherein at least one instruction is stored in the computer-readable storage medium, and the at least one instruction is loaded and executed by one or more processors to implement the relay determination method according to any one of claims 1 to 21.
